(19) Europäisches Patentamt
European Patent Office
Office européen des brevets

(11) Veröffentlichungsnummer: **0 464 072 B1**

(12) **EUROPÄISCHE PATENTSCHRIFT**

(45) Veröffentlichungstag der Patentschrift: **15.06.94**

(51) Int. Cl.5: **C09K 19/58**, C09K 19/46, C09K 19/34

(21) Anmeldenummer: **90904815.9**

(22) Anmeldetag: **21.03.90**

(86) Internationale Anmeldenummer:
**PCT/EP90/00458**

(87) Internationale Veröffentlichungsnummer:
**WO 90/11336 (04.10.90 90/23)**

(54) **FLÜSSIGKRISTALLINE, INSBESONDERE FERROELEKTRISCHE FLÜSSIGKRISTALLINE MISCHUNGEN.**

(30) Priorität: **22.03.89 DE 3909356**

(43) Veröffentlichungstag der Anmeldung:
**08.01.92 Patentblatt 92/02**

(45) Bekanntmachung des Hinweises auf die Patenterteilung:
**15.06.94 Patentblatt 94/24**

(84) Benannte Vertragsstaaten:
**AT BE CH DE FR GB IT LI NL SE**

(56) Entgegenhaltungen:
**EP-A- 0 248 335** **EP-A- 0 275 522**
**EP-A- 0 288 813** **EP-A- 0 292 954**
**EP-A- 0 355 561** **DE-A- 3 831 226**

(73) Patentinhaber: **HOECHST AKTIENGESELL-SCHAFT**

**D-65926 Frankfurt(DE)**

(72) Erfinder: **DÜBAL, Hans-Rolf**
**Heuhohlweg 6**
**D-6240 Königstein(DE)**

Erfinder: **ESCHER, Claus**
**Amselweg 3**
**D-6109 Mühltal(DE)**
Erfinder: **HARADA, Takamasa**
**4-35-15, Kikari, Inzai-machi**
**Inba-gun, Chiba(JP)**
Erfinder: **HEMMERLING, Wolfgang**
**Billtalstrasse 32**
**D-6231 Sulzbach(DE)**
Erfinder: **ILLIAN, Gerhard**
**Rauenthaler Weg 32**
**D-6230 Frankfurt am Main 80(DE)**
Erfinder: **MÜLLER, Ingrid**
**Am Pfingstbrunnen 1**
**D-6238 Hofheim am Taunus(DE)**
Erfinder: **MURAKAMI, Mikio**
**New Town Blg. 202,**
**8-1, Minami 2-chome**
**Kakegawa-shi, Shizuoka-ken(JP)**
Erfinder: **OHLENDORF, Dieter**
**Am Kühlen Grund 4**
**D-6237 Liederbach(DE)**

**EP 0 464 072 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Erfinder: **WINGEN, Rainer**
**Brunnenstrasse 1**
**D-6234 Hattersheim am Main(DE)**

## Beschreibung

Ferroelektrische Flüssigkristalle haben in jüngerer Zeit Interesse als Anzeigemedium in elektro-optischen Bauelementen gewonnen (z.B. Lagerwall et al. "Ferroelectric Liquid Crystals for Displays", SID Symposium, October Meeting 1985, San Diego, Ca. USA).

Für die praktische Verwendung von ferroelektrischen Flüssigkristallen in elektro-optischen Anzeigen werden chirale, geneigt-smektische Phasen wie $S_c$-Phasen benötigt [R.B. Meyer, L. Liébert, L. Strzelecki und P. Keller, J. Physique 36, L-69 (1975)], die über einen großen Temperaturbereich stabil sind. Dieses Ziel kann man erreichen mit Verbindungen, die selbst solche Phasen, z.B. $S_c$-Phasen, ausbilden oder aber, indem man nicht chirale, geneigt-smektische Phasen ausbildende Verbindungen mit optisch aktiven Verbindungen dotiert [M. Brunet, Cl. Williams, Ann. Phys. 3, 237 (1978)].

Weiterhin ist bei der Verwendung ferroelektrischer Flüssigkristallmischungen in elektro-optischen Bauelementen eine einheitliche planare Orientierung der Flüssigkristalle notwendig, um ein hohes Kontrastverhältnis zu erzielen. Es hat sich gezeigt, daß sich eine einheitliche planare Orientierung in der $S_c$-Phase erreichen läßt, wenn die Phasenfolge der Flüssigkristallmischung mit abnehmender Temperatur lautet:

Isotrop → nematisch → smektisch A → smektisch C.

(z.B. K. Flatischler et al., Mol. Cryst. Liq. Cryst. 131, 21 (1985); T. Matsumoto et al., p. 468-470, Proc. of the 6th Int. Display Research Conf., Japan Display, 30. September-2. October 1986, Tokyo, Japan; M. Murakami et al., ibid. p. 344-347).

Für ferroelektrische (chiral smektische) Flüssigkristallmischungen muß zusätzlich die Bedingung erfüllt sein, daß die Ganghöhe (pitch) der Helix in der $S_c^*$ -Phase groß, d.h. größer als 5 $\mu$m, und in der N*-Phase sehr groß, d.h. größer als 10 $\mu$m bzw. unendlich ist.

Die optische Schaltzeit $\tau[\mu s]$ ferroelektrischer Flüssigkristallsysteme, die möglichst kurz sein soll, hängt von der Rotationsviskosität des Systems $\gamma$[mPas], der spontanen Polarisation $P_S[nC/cm^2]$ und der elektrischen Feldstärke E[V/m] ab nach der Beziehung

$$\tau \approx \frac{\gamma}{P_S \cdot E}$$

Da die Feldstärke E durch den Elektrodenabstand im elektrooptischen Bauteil und durch die angelegte Spannung festgelegt ist, muß das ferroelektrische Anzeigemedium niedrigviskos sein und eine hohe spontane Polarisation aufweisen, damit eine kurze Schaltzeit erreicht wird.

Schließlich wird neben thermischer, chemischer und photochemischer Stabilität eine kleine optische Anisotropie $\Delta n$, vorzugsweise <0.13, und eine gering positive oder vorzugsweise negative dielektrische Anisotropie $\Delta\epsilon$ verlangt. (S.T. Lagerwall et al., "Ferroelectric Liquid Crystals for Displays" SID Symposium, Oct. Meeting 1985, San Diego, Ca, USA).

Die Gesamtheit dieser Forderungen ist nur mit Mischungen aus mehreren Komponenten zu erfüllen. Als Basis (oder Matrix) dienen dabei bevorzugt Verbindungen, die möglichst selbst bereits die gewünschte Phasenfolge $I \rightarrow N \rightarrow S_A \rightarrow S_c$ aufweisen. Weitere Komponenten der Mischung werden oftmals zur Schmelzpunktserniedrigung und zur Verbreiterung der $S_c$- und meist auch der N-Phase, zum Induzieren der optischen Aktivität, zur pitch-Kompensation und zur Anpassung der optischen und dielektrischen Anisotropie zugesetzt, wobei aber beispielsweise die Rotationsviskosität möglichst nicht vergrößert werden soll.

Es ist bekannt, daß bestimmte Derivate des Phenylpyrimidins, insbesondere 5-Alkyl-2(4-alkyloxyphenyl)-pyrimidine, $S_c$-, $S_A$- und N-Phasen ausbilden können (D. Demus und H. Zaschke, "Flüssige Kristalle in Tabellen", VEB Deutscher Verlag für Grundstoffindustrie, Leipzig 1974, S. 260-261) und daneben durch Zusatz optisch aktiver Dotierstoffe in ferroelektrische Flüssigkristall-Mischungen umgewandelt werden können [L.M. Blinov et al., Sow. Phys. Usp. 27 (7), 492 (1984); L.A. Beresnew et al., Ferroelectrics, 59 - [321]/1 (1984), vorgetragen auf der 5th. Conference of Soc. Countries on Liquid Crystals, Odessa, UdSSR, Oct. 1983; DE-A 35 15 347, EP-A 0 206 228, EP-A 0 225 195].

Es ist weiter bekannt, daß tiefere Schmelzpunkte und eine Verbreiterung der gewünschten flüssigkristallinen Phasen durch Mischen mehrerer flüssigkristalliner Verbindungen erreicht werden [D. Demus et al., Mol. Cryst. Liq. Cryst. 25, 215 (1974), J.W. Goodby, Ferroelectrics 49, 275 (1983)], und daß die Schmelzpunktsdepression umso ausgeprägter ist, je stärker sich auch die Mischungskomponenten strukturell unterscheiden. (J.S. Dave et al., J. Chem. Soc. 1955, 4305). Es war also davon auszugehen, daß

besonders tiefe Mischungsschmelzpunkte und damit tiefe Phasenumwandlungspunkte der $S_c$-Phase erhalten werden, wenn Verbindungen gemischt werden, die sich einerseits strukturell wesentlich unterscheiden, andererseits aber ähnlich genug sind, um gut mischbar zu sein.

Aus der DE-C 22 57 588 ist ein 5-Butyloxy-2(-4-pentyloxy-phenyl)-pyrimidin bekannt, das aber nur eine nematische Phase bildet.

Es wurde in DE 38 31 226.3 gefunden, daß sich als Basiskomponente Verbindungen vom Typ 5-Alkyloxy-2(4-alkyloxy-phenyl)-pyrimidine der allgemeinen Formel (I)

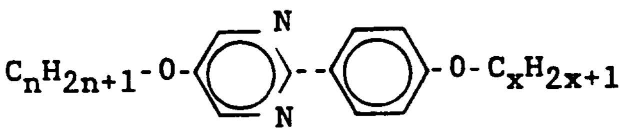
(I),

in der $C_nH_{2n+1}$ und $C_xH_{2x+1}$ geradkettige Alkylreste sind, in denen n eine ganze Zahl von 6 bis 14 und x eine ganze Zahl von 2 bis 14 bedeuten, als Matrix (Basis) für flüssigkristalline, insbesondere ferroelektrische flüssigkristalline Mischungen besonders gut eignen; von ihnen sind mindestens 2 unterschiedliche Verbindungen a' und a" im Gemisch vorhanden. Sie zeigen größtenteils mit abnehmender Temperatur die erwünschte Phasenfolge $I \rightarrow N \rightarrow S_A \rightarrow S_c$. Im Vergleich zu den bekannten 5-Alkyl-2-(4-alkoxy-phenyl)-pyrimidinen weisen sie erheblich breitere $S_c$-Phasen und höhere Umwandlungstemperaturen des $S_c \rightarrow S_A$-Übergangs auf. Die $S_c$-Phase wird außerdem bereits bei einer niedrigeren Anzahl von C-Atomen in den Alkyl(oxy)ketten gebildet, z.B. bereits dann, wenn $n = 8$ und $x > 2$ oder $n = 6$ und $x > 6$ sind. Es ergibt sich daraus für die Mischungsherstellung im Vergleich zu den bekannten 5-Alkyl-2-(4-alkoxy-phenyl)-pyrimidinen eine größere Auswahl an homologen, gut mischbaren Verbindungen mit $S_c$-Phasen. Diese ermöglichen es außerdem aufgrund ihrer höheren Phasenumwandlungstemperaturen $S_A$ nach $S_c$ (z.B. 70 bis 90 °C) und ihrer breiteren $S_c$-Phasen, Mischungen mit sehr breiten $S_c$-Phasen (z.B. bis zu ca. 68 °C) und hohen Umwandlungstemperaturen $S_A/S_c$ herzustellen.

Die Mischungen gemäß DE 38 31 226.3 aus Verbindungen der Formel (I) eignen sich bereits sehr gut als Matrix für ferroelektrische flüssigkristalline Mischungen. Sie weisen allerdings noch eine große optische ($\Delta n$) und eine große positive dielektrische ($\Delta\epsilon$) Anisotropie auf. Außerdem ist die nematische Phase, je nach der Kettenlänge n bzw. x der Substituenten, noch schmal.

Durch Zusatz mindestens einer Verbindung (Cyclohexancarbonsäureester) der allgemeinen Formel (II), d. h. einer Verbindung vom Typ b,

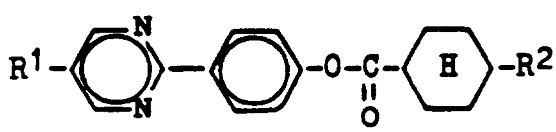
(II)

können gleichzeitig die Größen [$\Delta n$] und [$\Delta\epsilon$] optimiert und die Breite der nematischen Phase den praktischen Anforderungen angepaßt werden.

Es bedeuten in der allgemeinen Formel (II):

$R^1$ eine Alkylkette mit 10 bis 16 oder eine Alkoxykette mit 8 bis 14 C-Atomen und $R^2$ eine Alkylkette mit 2 bis 9 C-Atomen. Diese Verbindungen werden in der DE-A 37 31 639 beschrieben. Sie entfalten ihre günstige Wirkung bereits bei Zusatzmengen ab etwa 2 mol% bezogen auf die Mischung aus den Komponenten vom Typ a und b. Bei Zusatzmengen ab etwa 10 und bis etwa 40 mol% ergibt sich eine Verbreiterung der nematischen Phase um etwa 8 bis 18 °C und der smektischen Phase um etwa 6 bis 15 °C. Sehr vorteilhaft ist es daneben, daß der Zusatz die an sich bereits sehr niedrige Rotationsviskosität der erfindungsgemäßen Basis-Mischung nur unwesentlich erhöht.

Eine Absenkung des Schmelzpunkts und der unteren Phasenumwandlungstemperatur der $S_c$-Phase der Mischungen kann, wenn diese noch zu hoch liegen, durch Zusatz mindestens einer Verbindung (Alkenyloxy-phenyl-pyrimidin-Derivat) der allgemeinen Formel (III), d. h. einer Verbindung vom Typ c, zu Mischungen aus Verbindungen vom Typ a alleine oder mit einem zusätzlichen Gehalt an Verbindungen vom Typ b erreicht werden:

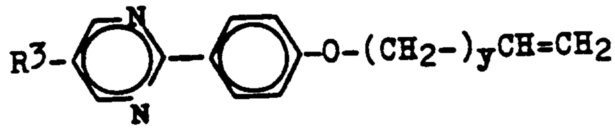

(III)

In der allgemeinen Formel (III) bedeuten $R^3$ einen verzeigten oder geradkettigen Alkylrest mit 7 bis 16 C-Atomen oder einen geradkettigen oder verzweigten Alkoxyrest mit 6 bis 14 C-Atomen und y eine ganze Zahl von 4 bis 14. Diese Verbindungen werden in der DE-A 37 31 638 beschrieben. Zusatzmengen von etwa 10 bis 35 mol%, bezogen auf die Gesamtmischung, bewirken eine Absenkung der unteren Temperaturgrenze der $S_c$-Phase um bis zu 5 °C. Die übrigen günstigen physikalischen Eigenschaften der Mischungen werden durch diesen Zusatz in der Regel nicht beeinträchtigt.

Zur Absenkung des Schmelzpunkts und der unteren Temperaturgrenze der $S_c$-Phase können zusammen mit Verbindungen des Typs c oder an ihrer Stelle auch Verbindungen der Formel (IV), d. h. des Typs d,

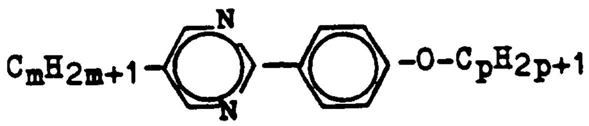

(IV)

zugesetzt werden, wobei m und p unabhängig voneinander ganze Zahlen von 6 bis 14 sind. Bei Zusatzmengen von etwa 10 bis 25 mol% der Verbindung des Typs d bzw. Mischungen mit Verbindungen des Typs c, bezogen auf die Gesamtmischung, zu Mischungen aus Verbindungen des Typs a bzw. a und b ergeben sich Absenkungen der unteren Temperaturgrenze der $S_c$-Phase um bis zu 10 °C.

Einzelne dieser Komponenten und auch bestimmte Mischungen sind bereits aus dem Stand der Technik bekannt. Da aber die Entwicklung, insbesondere von ferroelektrischen Flüssigkristall-Mischungen, noch in keiner Weise als abgeschlossen betrachtet werden kann, sind die Hersteller von Anzeigeelementen ("displays") an unterschiedlichsten Mischungen interessiert. Dieses u. a. auch deshalb, weil erst das Zusammenwirken der flüssigkristallinen Mischungen mit den einzelnen Bauteilen der Anzeigeelemente bzw. der Zellen (z. B. der Orientierungsschicht) Rückschlüsse auf die Qualität auch der flüssigkristallinen Mischungen zuläßt.

Aufgabe der vorliegenden Erfindung ist es deshalb, Kompositionen aus geeigneten Komponenten für flüssigkristalline Grundmischungen, aber auch für ferroelektrische flüssigkristalline Mischungen bereitzustellen, die möglichst viele der vorstehend dargestellten Kriterien erfüllen, die insbesondere einen niedrigen Schmelzpunkt besitzen und die ferner in einem Display zu verbessertem Kontrast führen.

Ein Gegenstand der Erfindung sind die nachstehend charakterisierten flüssigkristallinen Grundmischungen, die zum einen Verbindungen A aus DE 38 31 226.3 enthalten, die zum anderen aber auch mindestens einen Carbonsäureester C der allgemeinen Formel (V), (VI), (VII), (VIII) oder (IX) als Mischungskomponente enthalten.

Ein weiterer Gegenstand der Erfindung sind dann flüssigkristalline Mischungen mit günstigen Werten für die optische und die dielektrische Anisotropie und einer für die praktische Verwendung ausreichend breiten nematischen Phase.

Ein bevorzugter Gegenstand der Erfindung sind ebenfalls ferroelektrische flüssigkristalline Mischungen mit kurzer Schaltzeit, der Phasenfolge $I \rightarrow N^* \rightarrow S_A^*$, $S_c^*$, wobei der pitch in der nematischen Phase >15 µm und in der $S_c^*$-Phase >5 µm ist, und einem negativen $\Delta\epsilon$ und $\Delta n < 0.15$, die zusätzlich zu den Komponenten A und den Carbonsäureestern B noch einen chiralen Dotierstoff C enthalten.

Die neue Erfindung umfaßt flüssigkristalline Mischungen, enthaltend als Komponente A mindestens zwei 5-Alkoxy-2-(alkyloxy-phenyl)pyrimidine der allgemeinen Formel (I)

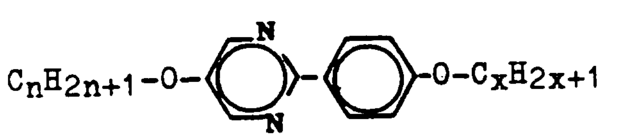

(I),

in der die Alkylreste geradkettige Alkylreste sind, in denen n eine ganze Zahl von 6 bis 14 und x eine ganze Zahl von 2 bis 14 bedeuten,
und gegebenenfalls einen oder mehrere Cyclohexancarbonsäureester der allgemeinen Formel (II)

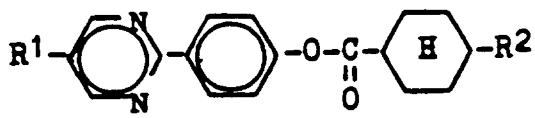

(II),

in der $R^1$ einen Alkylrest mit 10 bis 16 C-Atomen oder einen Alkyloxyrest mit 8 bis 14 C-Atomen und $R^2$ einen Alkylrest mit 2 bis 9 C-Atomen bedeutet,
und gegebenenfalls ein oder mehrere Alkenyloxy-phenylpyrimidin-Derivate der allgemeinen Formel (III)

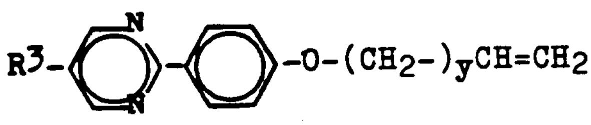

(III)

in der $R^3$ eine Alkylkette mit 7 bis 16 C-Atomen oder eine Alkyloxykette mit 6 bis 14 C-Atomen und y eine ganze Zahl von 4 bis 14 bedeuten,
und gegebenenfalls ein oder mehrere Alkyl-pyrimidinalkoxy-phenyl-Derivate der allgemeinen Formel (IV)

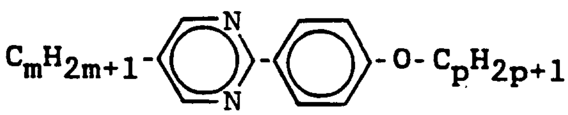

(IV)

in der m und p unabhängig voneinander ganze Zahlen von 6 bis 14 sind,
sowie gegebenenfalls als Komponente B (für ferroelektrische Flüssigkristallmischungen) mindestens eine optisch aktive Verbindung aus der Gruppe

a) optisch aktive Ester aus $\alpha$-Chlorcarbonsäuren und mesogenen Phenolen,
b) optisch aktive Ester des N-Acylprolins,
c) optisch aktive Ester von 1,3-Dioxolan-4-carbonsäuren,
d) optisch aktive Ester von Oxiran-2-carbonsäuren

dadurch gekennzeichnet, daß die Flüssigkristall-Mischungen ferner mindestens einen Carbonsäureester der allgemeinen Formeln (V), (VI), (VII), (VIII) oder (IX) als Mischungskomponente enthalten:

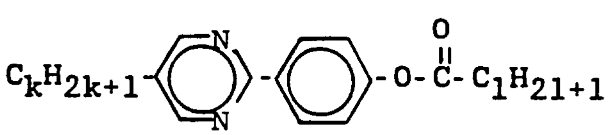

(V),

wobei
k eine ganze Zahl von 6 bis 14 und
l eine ganze Zahl von 2 bis 14 bedeuten kann,

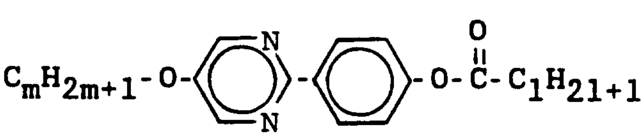

(VI),

wobei
m eine ganze Zahl von 5 bis 14 und

l eine ganze Zahl von 2 bis 14 bedeuten kann,

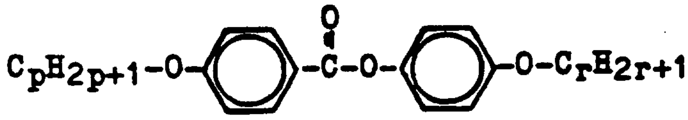

(VII),

wobei
p eine ganze Zahl von 7 bis 14 und
r eine ganze Zahl von 4 bis 14 bedeuten kann,

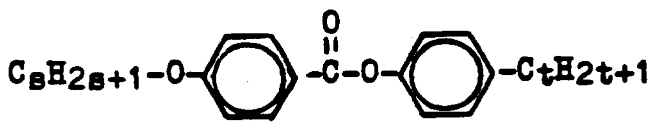

(VIII),

wobei
s eine ganze Zahl von 6 bis 14 und
t eine ganze Zahl von 6 bis 14 bedeuten kann,

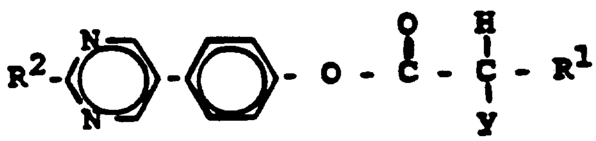

(IX)

wobei

$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,

y = F, Cl, Br, CN oder $CF_3$ und

$R^1$ = verzweigtes ($C_3$-$C_9$)-Alkyl, Benzyl oder Phenyl.

Bevorzugt werden Flüssigkristallmischungen, die sie Komponente C mindestens einen Carbonsäure-4-(5-alkyl-pyrimidin-2-yl)-phenylester der allgemeinen Formel (V) enthalten

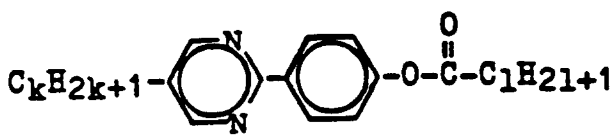

(V),

wobei
k eine ganze Zahl von 6 bis 14 und
l eine ganze Zahl von 4 bis 14 bedeuten kann.

Ebenfalls bevorzugt werden solche Mischungen, die als Komponente C mindestens einen Carbonsäure-4-(5-alkoxy-pyrimidin-2-yl)-phenylester der allgemeinen Struktur (VI) enthalten

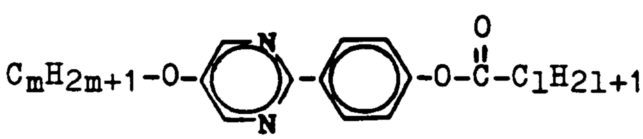

(VI),

wobei
m eine ganze Zahl von 6 bis 14 und

l eine ganze Zahl von 4 bis 14 bedeuten kann.

Bevorzugt werden auch flüssigkristalline Mischungen die als Komponente C mindestens einen Benzoesäureester der allgemeinen Struktur (VII) enthalten

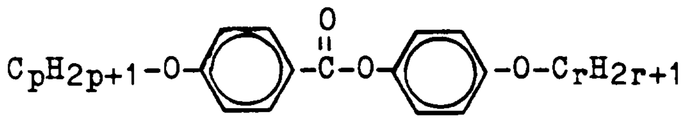

(VII),

wobei
p eine ganze Zahl von 7 bis 14 und
r eine ganze Zahl von 4 bis 14 bedeuten kann.

Ebenfalls bevorzugt werden Mischungen die als Komponente C mindestens einen Benzoesäureester der allgemeinen Struktur (VIII) enthalten

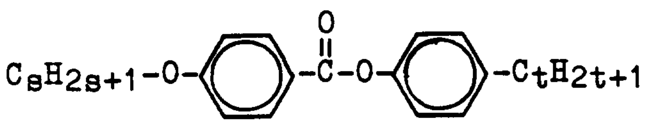

(VIII),

wobei
s eine ganze Zahl von 6 bis 14 und
t eine ganze Zahl von 6 bis 14 bedeuten kann.

Außerdem werden solche Mischungen bevorzugt, die mindestens als eine Komponente ein Racemat der Struktur (IX) enthalten

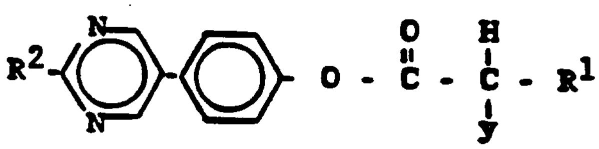

(IX)

wobei
$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,
y = F, Cl, $CF_3$ und
$R^1$ = verzweigtes ($C_3$-$C_9$)-Alkyl, Benzyl oder Phenyl ist.

Besonders bevorzugt sind Flüssigkristallmischungen, die als Komponente C das Racemat mindestens eines $\alpha$-Halogencarbonsäureesters der Struktur (IXa) enthalten

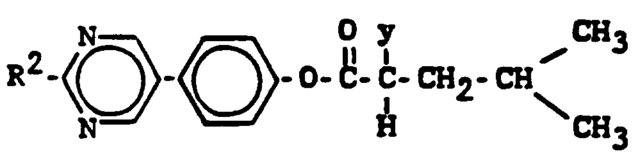

(IXa)

wobei $R^2$ ein Alkylrest oder Alkenylrest mit 1 bis 12 C-Atomen sein kann, dessen an den Aromaten gebundene $CH_2$-Gruppe auch durch 0 und/oder S ersetzt sein kann, und y = F, Cl.

Ganz besonders geeignet sind hierbei die α-Halogencarbonsäuren der Strukturen (IXb) und (IXc)

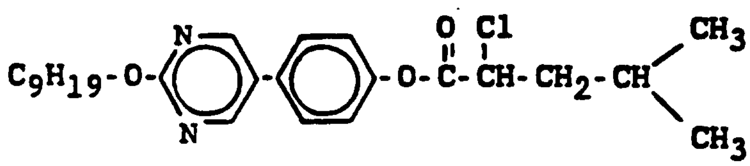

(IXb)

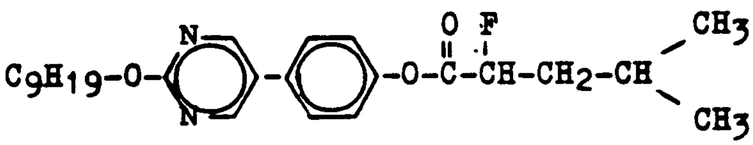

(IXc).

Es wurde nun gefunden, daß die erfindungsgemäßen FLC-Mischungen, die als Komponente C 2 bis 25 Mol-%, insbesondere 10 bis 25 Mol-%, von Mischungen oder einzelnen Verbindungen der allgemeinen Strukturen (V) und/oder (VI) und/oder (VII) und/oder (VIII) und/oder (IX) enthalten, einen um bis zu 10 °C niedrigeren oberen Phasenumwandlungspunkt aufweisen als die entsprechenden Mischungen ohne die erfindungsgemäßen Komponenten.

Ferner wird der Kontrast um bis zu 10 % erhöht und in einigen Fällen auch eine Verkürzung der Schaltzeiten durch den Zusatz erwirkt.

Durch den gezielten Zusatz der obengenannten Verbindungen der Formeln (V bis IX) können die physikalischen Größen [Δn] und [Δε] der Mischung optimiert, d. h. an die jeweiligen spezifischen Erfordernisse des Anzeigeelements angepaßt werden.

Überraschenderweise wurde ferner beobachtet, daß flüssigkristalline Mischungen, die 2 bis 15 Mol-% an racemischen Mischungen von einem oder mehreren Estern der allgemeinen Struktur (IX) enthalten, einen um zu 5 °C niedrigeren Schmelzpunkt sowie einen bis zu 10 °C niedrigeren oberen $S_c$-Phasenumwandlungspunkt besitzen als die entsprechende Basismischung ohne diese Komponente(n). Der Kontrast der erfindungsgemäßen Mischungen ist um bis zu 20 % größer als der der Basismischungen. Als besonders geeignet erweist sich hierbei eine Dotierung mit einer racemischen Mischung des α-Chlorcarbonsäureesters (IXb)

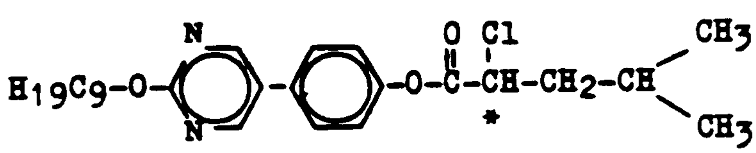

(IXb).

Die erfindungsgemäßen Flüssigkristall-Mischungen eignen sich sowohl als Basis-Mischungen wie auch bei Zusatz von chiralen Dotierstoffen B als neue ferroelektrische Flüssigkristall-Mischungen, die in besonderem Maße für die praktische Verwendung in elektrooptischen Schalt- und Anzeigeelementen geeignet sind.

Wie bereits vorgeschlagen (DE 38 31 226.3) haben sich folgende Dotierstoffe für den Zweck der Erfindung als besonders geeignet erwiesen:

a) optische aktive Ester aus α-Chlorcarbonsäuren und mesogenen Phenolen gemäß der DE-A 37 03 228 und insbesondere der optisch aktive Ester gemäß der nachstehenden Formel

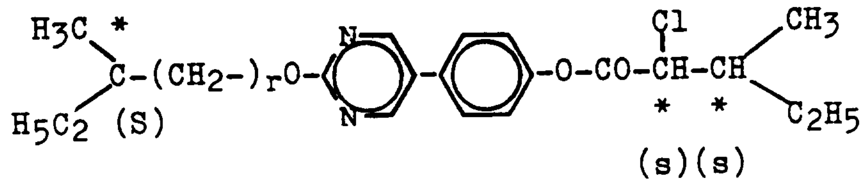

mit r = 4 bis 8

b) optisch aktive Ester des N-Acylprolins gemäß der DE-A 36 44 522

c) optisch aktive Ester von 1,3-Dioxolan-4-carbonsäuren gemäß der DE-A 37 13 273

d) optisch aktive Ester von Oxiran-2-carbonsäuren gemäß der DE-A 37 18 174.

Diese Dotierstoffe induzieren vielfach schon bei geringen Zusatzmengen ab 0,5 und insbesondere ab 3 mol-%, bezogen auf die Gesamtmischung, das ferroelektrische Verhalten. Die obere Grenze der Zusatzmenge liegt bei 30 Mol-%.

Der Zusatz dieser Dotierstoffe beeinflußt in der Regel, daß eine nochmalige Absenkung des Schmelzpunkts und der unteren Temperaturgrenze der $S_c^*$-Phase auftritt. Außerdem kann je nach Art und Menge des Dotierstoffs eine Senkung oder Erhöhung der oberen Temperaturgrenze der $S_c^*$ -Phase und eine Änderung der Breite der N*-Phase eintreten, was bei der Herstellung der Matrixmischung zu berücksichtigen ist. Der optisch aktive Dotierstoff induziert bekanntlich in der $S_c$- und in der N-Phase eine helixförmige Verdrillung, wodurch diese Phasen in die $S_c^*$ - bzw. N*-Phasen überführt werden. Die Ganghöhe (pitch) und der Drehsinn dieser Helices in der N*-Phase hängen von Art und Menge des optisch aktiven Dotierstoffs ab. Sie müssen vielfach durch Zusatz eines weiteren Dotierstoffs kompensiert werden, der eine Helix mit entgegengesetztem Drehsinn induziert. Allgemein gilt, daß eine ferroelektrische Flüssigkristallmischung in der N*-Phase eine Helix mit einer Ganghöhe von mehr als 10 $\mu$m und in der $S_c^*$-Phase von mindestens 5 $\mu$m aufweisen sollte. Die zur Kompensation der Ganghöhe verwendeten Verbindungen sollen in der Mischung vorzugsweise keine oder nur eine vernachlässigbar geringe spontane Polarisation oder eine spontane Polarisation mit dem gleichen Vorzeichen wie der optisch aktive Dotierstoff erzeugen.

Falls eine pitch-Kompensation erforderlich wird, so sind in den erfindungsgemäßen Mischungen die folgenden Kombinationen besonders geeignet:

$a_1$) Optisch aktive a-Chlorcarbonsäureester erzeugen eine negative $P_s$ und eine Helix mit negativem Drehsinn. Zur Kompensation setzt man vorteilhaft Derivate des Citronellols der allgemeinen Formel (N) zu

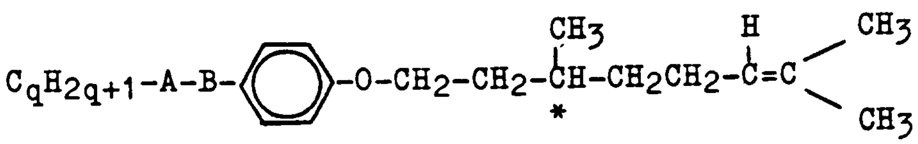 (N)

Darin bedeuten q eine ganze Zahl von 6 bis 16, A ein Sauerstoffatom oder eine chemische Bindung und B einen Pyrimidin-2,5-diyl-Ring, wobei sich der daran gebundene Phenylenring in 2- oder 5-Stellung befinden kann. Zur pitch-Kompensation werden bis zu 4 mol% bezogen auf die Gesamtmischung bzw. 1 mol Citronellolderivat auf 7 bis 13 mol $\alpha$-Chlorcarbonsäureester benötigt.

$b_1$) Optisch aktive N-Acylprolinester mit S-Konfiguration am asymmetrischen C-Atom, die in den erfindungsgemäßen Mischungen eine positive $P_s$ und einen negativen pitch erzeugen, lassen sich kompensieren durch Zusatz optisch aktiver Oxiran-2-carbonsäureester gemäß DE-A 37 18 174 mit positiver $P_s$ und insbesondere 2-R-3-R-Konfiguration. Die zuzusetzende Menge beträgt bis zu 6 mol% bezogen auf die Gesamtmischung bzw. 1 mol Oxiran-2-carbonsäureester auf 5 bis 9 mol N-Acylprolinester.

$c_1$) Die Kompensation bei optisch aktiven 1,3-Dioxolan-4-carbonsäureestern mit R-Konfiguration, die ebenfalls eine postive $P_s$ und einen negativen pitch erzeugen, erfolgt zweckmäßig ebenfalls mit Oxiran-2-carbonsäureestern wie unter $b_1$) beschrieben.

Die Verwendung von Oxiran-2-carbonsäureestern, wie bei $b_1$) und $c_1$) beschrieben, hat den zusätzlichen Vorteil, daß diese Verbindungen selbst eine sehr hohe positive $P_s$ erzeugen und damit die $P_s$ der Gesamtmischung erhöhen und die Schaltzeit verkürzen.

Für die gebrauchsfertigen ferroelektrischen Flüssigkristall-Mischungen wurden die Werte für die spontane Polarisation $P_s$ [nC/cm$^2$], den Kontrast K, die optische Schaltzeit $\tau$ [$\mu$s], die dielektrische Anisotropie $\Delta\epsilon$ und die optische Anisotropie $\Delta n$ ermittelt. (Alle Messungen bei 25 °C).

Die $P_s$-Werte werden nach der Methode von H. Diamant et al. (Rev. Sci. Instr., 28, 30, 1957) gemessen, wobei Meßzellen mit 2 $\mu$m Elektrodenabstand und geriebenem Polyimid als Orientierungsschicht verwendet werden.

Zur Bestimmung von $\tau$ und K wird die Meßzelle auf dem Drehtisch eines Polarisationsmikroskops zwischen gekreuztem Analysator und Polarisator befestigt.

Für die Bestimmung des Kontrastes (K) wird die Meßzelle durch Drehen so positioniert, daß eine Photodiode minimalen Lichtdurchgang anzeigt (Dunkelzustand). Die Mikroskopbeleuchtung wird so geregelt, daß die Photodiode für alle Zellen die gleiche Lichtintensität anzeigt. Nach einem Schaltvorgang ändert sich die Lichtintensität (Hellzustand) und der Kontrast wird aus dem Verhältnis der Lichtintensitäten dieser Zustände berechnet.

Mit Hilfe einer Photodiode erfolgt die Bestimmung der Schaltzeit $\tau$, indem die Anstiegszeit des Lichtsignals von 10 auf 90 % Signalhöhe gemessen wird. Die Schaltspannung besteht aus Rechteckpulsen und beträgt ± 10 V/$\mu$m.

Die Phasenumwandlungstemperaturen werden beim Aufheizen mit Hilfe eines Polarisationsmikroskops anhand der Texturänderungen bestimmt. Die Bestimmung des Schmelzpunkts wurde hingegen mit einem DSC-Gerät durchgeführt. Die Angabe der Phasenumwandlungstemperaturen zwischen den Phasen

Nematisch (N bzw. N*)
Smektisch-C ($S_c$ bzw. $S_c$*)
Smektisch-A ($S_A$ bzw. $S_A$*)
Kristallin (X)

erfolgt in °C und die Werte stehen zwischen den Phasenbezeichnungen in der Phasenfolge.

**Beispiel 1**

a) Eine flüssigkristalline Mischung aus den folgenden acht Komponenten

5-Octyloxy-2-(4-hexyloxy-phenyl)-pyrimidin 14 Mol-%
5-Octyloxy-2-(4-octyloxy-phenyl)-pyrimidin 5 Mol-%
5-Octyloxy-2-(4-butyloxy-phenyl)-pyrimidin 15 Mol-%
5-Octyloxy-2-(4-decyloxy-phenyl)-pyrimidin 8 Mol-%
5-Octyloxy-2-(4-dodecyloxy-phenyl)-pyrimidin 8 Mol-%
5-Octyl-2-(4-decyloxy-phenyl)-pyrimidin 13 Mol-%
trans-4-Pentyl-cyclohexancarbonsäure-[4-(5-decyl-pyrimidin-2-yl)]-phenylester 17 Mol-%

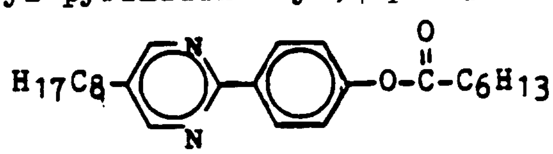

Heptansäure-[4-(5'-Octylpyrimidin-2-yl)]-phenylester 20 Mol-%
(= Verbindung der allgemeinen Formel V)

zeigt folgende flüssigkristalline Phasenbereiche:

X -5 $S_c$ 71 $S_A$ 78 N 93 I

b) Für den Vergleich der physikalischen Eigenschaften bietet sich die folgende, in DE 38 31 226.3 beanspruchte Mischung an, die sich von der Mischung 1a nur dadurch unterscheidet, daß sie keine Komponente der allgemeinen Formel V enthält. Diese Mischung aus sieben Komponenten weist die

folgenden flüssigkristallinen Phasenbereiche auf:
X -1 $S_c$ 81 $S_A$ 87 N 103 I
Die erfindungsgemäße Mischung 1a weist im Vergleich zu der Mischung 1b einen um 4 ° C niedrigeren Schmelzpunkt (X) und eine um 10 ° C niedrigere obere
$S_c$-Phasenbereichsgrenztemperatur auf.

**Beispiel 2**

a) Eine flüssigkristalline Mischung aus den folgenden acht Komponenten

| | |
|---|---|
| 5-Octyloxy-2-(4-hexyloxy-phenyl)-pyrimidin | 16 Mol-% |
| 5-Octyloxy-2-(4-octyloxy-phenyl)-pyrimidin | 6 Mol-% |
| 5-Octyloxy-2-(4-butyloxy-phenyl)-pyrimidin | 15 Mol-% |
| 5-Octyloxy-2-(4-decyloxy-phenyl)-pyrimidin | 8 Mol-% |
| 5-Octyloxy-2-(4-dodecyloxy-phenyl)-pyrimidin | 8 Mol-% |
| 5-Octyl-2-(4-dodecyloxy-phenyl)-pyrimidin | 13 Mol-% |
| trans-4-Pentyl-cyclohexancarbonsäure-[4-(5-decyl-pyrimidin-2-yl)]-phenylester | 19 Mol-% |
| 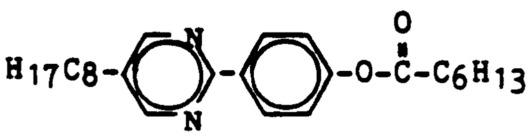 Heptansäure-[4-(5'-Octylpyrimidin-2-yl)]-phenylester (= Verbindung der allgemeinen Formel V) | 15 Mol-% |

zeigt folgende flüssigkristalline Phasenbereiche:
X -5 $S_c$ 75 $S_A$ 80 N 87 I
b) Für den Vergleich der physikalischen Eigenschaften bietet sich die folgende, in DE 38 31 226.3 beanspruchte Mischung an, die sich von der Mischung 2a nur dadurch unterscheidet, daß sie keine Komponente der allgemeinen Formel V enthält.

Diese Mischung aus sieben Komponenten weist die folgenden flüssigkristallinen Phasenbereiche auf:
X -2 $S_c$ 81 $S_A$ 86 N 104 I
Die erfindungsgemäße Mischung 2a weist im Vergleich zu der Mischung 2b einen um 3 ° C niedrigeren Schmelzpunkt und eine um 6 ° C niedrigere obere
$S_c$-Phasenbereichsgrenztemperatur auf.

**Beispiel 3**

a) Eine flüssigkristalline Mischung aus den folgenden acht Komponenten

| | |
|---|---|
| 5-Octyloxy-2-(4-hexyloxy-phenyl)-pyrimidin | 15 Mol-% |
| 5-Octyloxy-2-(4-octyloxy-phenyl)-pyrimidin | 6 Mol-% |
| 5-Octyloxy-2-(4-butyloxy-phenyl)-pyrimidin | 15 Mol-% |
| 5-Octyloxy-2-(4-decyloxy-phenyl)-pyrimidin | 8 Mol-% |
| 5-Octyloxy-2-(4-dodecyloxy-phenyl)-pyrimidin | 8 Mol-% |
| 5-Octyl-2-(4-dodecyloxy-phenyl)-pyrimidin | 14 Mol-% |
| trans-4-Pentyl-cyclohexylcarbonsäure-[4-(5-decylpyrimidin-2-yl)]-phenylester | 14 Mol-% |

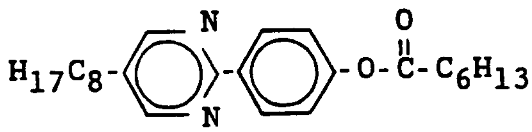

Heptansäure-[4-(5-Octylpyrimidin-2-yl)]-phenylester 20 Mol-%
(= Verbindung der allgemeinen Formel V)

zeigt folgende flüssigkristalline Phasenbereiche:
X -3,5 $S_c$ 69 $S_A$ 80 N 92 I

b) Für den Vergleich der physikalischen Eigenschaften bietet die folgende, in DE 38 31 226.3 beanspruchte Mischung an, die sich von der Mischung 3a nur dadurch unterscheidet, daß sie keine Komponente der allgemeinen Formel V enthält.

Diese Mischung aus sieben Komponenten weist die folgenden flüssigkristallinen Phasenbereiche auf:
X 0 $S_c$ 80 $S_A$ 88 N 102 I

Die erfindungsgemäße Mischung 3a weist im Vergleich einen um 3,5 °C niedrigeren Schmelzpunkt und eine um 11 °C niedrigere obere $S_c$-Phasenbereichsgrenztemperatur auf.

**Beispiel 4**

a) Eine flüssigkristalline Mischung aus den folgenden acht Komponenten

| | |
|---|---|
| 5-Octyloxy-2-(4-hexyloxy-phenyl)-pyrimidin | 16 Mol-% |
| 5-Octyloxy-2-(4-octyloxy-phenyl)-pyrimidin | 6 Mol-% |
| 5-Octyloxy-2-(4-butyloxy-phenyl)-pyrimidin | 16 Mol-% |
| 5-Octyloxy-2-(4-decyloxy-phenyl)-pyrimidin | 8 Mol-% |
| 5-Octyloxy-2-(4-dodecyloxy-phenyl)-pyrimidin | 8 Mol-% |
| 5-Octyl-2-(4-dodecyloxy-phenyl)-pyrimidin | 14 Mol-% |
| trans-4-Pentyl-cyclohexancarbonsäure-[4-(5-decyl-pyrimidin-2-yl)]-phenylester | 22 Mol-% |

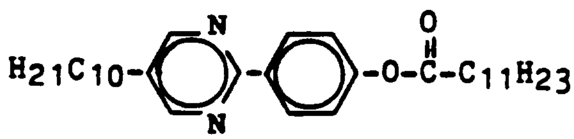

| | |
|---|---|
| Dodecansäure-4-(5-decyl-pyrimidin-2-yl)-phenylester | 10 Mol-% |

(= Verbindung der allgemeinen Formel V)

zeigt folgende flüssigkristalline Phasenbereiche:
X -5,5 $S_c$ 79 $S_A$ 84 N 94 I

b) Für den Vergleich der physikalischen Eigenschaften bietet sich die folgende, in DE 38 31 226.3 beanspruchte Mischung an, die sich von der Mischung 4a nur dadurch unterscheidet, daß sie keine Komponente der allgemeinen Formel V enthält.

Diese Mischung aus sieben Komponenten weist die folgenden flüssigkristallinen Phasenbereiche auf:
X -2 $S_c$ 81 $S_A$ 86 N 104 I

Die erfindungsgemäße Mischung 4a weist im Vergleich einen um 3,5 °C niedrigeren Schmelzpunkt und eine um 2 °C niedrigere obere $S_c$-Phasenbereichsgrenztemperatur auf.

**Beispiel 5**

a) Eine flüssigkristalline Mischung besteht aus den folgenden neun Komponenten

| | |
|---|---|
| 5-Octyloxy-2-(4-decyloxy-phenyl)-pyrimidin | 7,5 Mol-% |
| 5-Octyloxy-2-(4-octyloxy-phenyl)-pyrimidin | 4 Mol-% |
| 5-Octyloxy-2-(4-hexyloxy-phenyl)-pyrimidin | 9 Mol-% |
| 5-Octyloxy-2-(4-butyloxy-phenyl)-pyrimidin | 9,5 Mol-% |
| 5-Octyl-2-(4-decyloxy-phenyl)-pyrimidin | 9,5 Mol-% |
| 5-Octyl-2-(4-hexyloxy-phenyl)-pyrimidin | 14 Mol-% |
| 5-Octyl-2-(4-octyloxy-phenyl)-pyrimidin | 13 Mol-% |
| trans-4-Pentyl-cyclohexancarbonsäure-[4-(5-decyl-pyrimidin-2-yl)]-phenylester | 28,5 Mol-% |

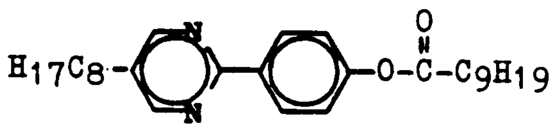

| | |
|---|---|
| Decansäure-4-(5-Octylpyrimidin-2-yl)-phenylester (= Verbindung der allgemeinen Formel V) | 5 Mol-% |

zeigt die folgenden flüssigkristallinen Phasenbereiche:

X -3 $S_c$ 68 N 94 I

b) Eine vergleichbare Mischung, die sich von der Mischung 5a nur dadurch unterscheidet, daß sie keine Komponente der allgemeinen Formel V enthält, weist folgende flüssigkristalline Phasenbereiche auf:

X -2 $S_c$ 80 N 99 I

Die Zugabe der Komponente der allgemeinen Formel V hat also zu einer Erniedrigung des Schmelzpunktes um 1 ° C geführt.

**Beispiel 6**

a) Eine flüssigkristalline Mischung aus den folgenden acht Komponenten

| | |
|---|---|
| 5-Octyloxy-2-(4-hexyloxy-phenyl)-pyrimidin | 16 Mol-% |
| 5-Octyloxy-2-(4-octyloxy-phenyl)-pyrimidin | 6 Mol-% |
| 5-Octyloxy-2-(4-butyloxy-phenyl)-pyrimidin | 15 Mol-% |
| 5-Octyloxy-2-(4-decyloxy-phenyl)-pyrimidin | 8 Mol-% |
| 5-Octyloxy-2-(4-dodecyloxy-phenyl)-pyrimidin | 8 Mol-% |
| 5-Octyl-2-(4-dodecyloxy-phenyl)-pyrimidin | 13 Mol-% |
| trans-4-Pentyl-cyclohexancarbonsäure-[4-(5-decyl-pyrimidin-2-yl)]-phenylester | 19 Mol-% |

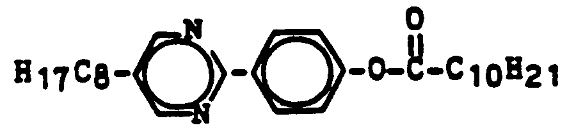

| | |
|---|---|
| Undecansäure-4-(5-octyl-pyrimidin-2-yl)-phenylester (= Verbindung der allgemeinen Formel V) | 15 Mol-% |

zeigt folgende flüssigkristalline Phasenbereiche:
X -5 $S_c$ 75 $S_A$ 80 N 87 I

b) Für den Vergleich der physikalischen Eigenschaften bietet sich die folgende, in DE 38 31 226.3 beanspruchte Mischung an, die sich von der Mischung 6a nur dadurch unterscheidet, daß sie keine Komponente der allgemeinen Formel V enthält.

Diese Mischung aus sieben Komponenten weist die folgenden flüssigkristallinen Phasenbereiche auf:
X -2 $S_c$ 81 $S_A$ 86 N 104 I

Die erfindungsgemäße Mischung 6a weist im Vergleich einen um 3 °C niedrigeren Schmelzpunkt und eine um 6 °C niedrigere obere $S_C$-Phasenbereichsgrenztemperatur auf.

**Beispiel 7**

Folgende ferroelektrische Mischungen bestehen aus den folgenden Komponenten
X Mol-% der Mischung aus Beispiel 2b

Y Mol-% 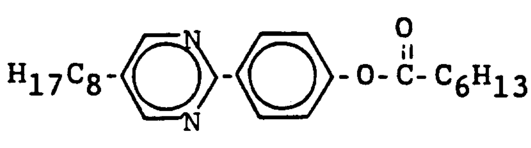

Heptylsäure-[4-(5'-Octylpyrimidin-2-yl)]-phenylester
(Verbindung der allgemeinen Formel V)

6 Mol-% 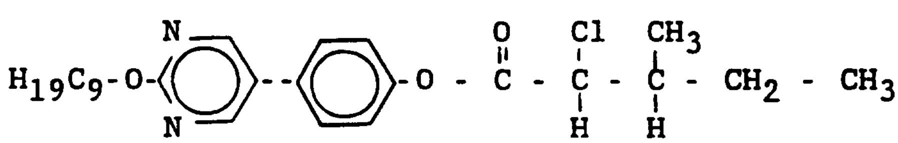

4-(2-Nonyloxypyrimidin-5-yl)-phenyl-(2S,3S)-2-chlor-3-methylpentansäureester
In der nachstehenden Tabelle 1 sind die Eigenschaftsmerkmale der Beispiele zusammengefaßt wiedergegeben.

**Tabelle 1**

| Beispiel | Konzentration X | Konzentration Y | Kontrast K | Schaltzeit $\tau$ | Polarisation $P_s$ | Phasenumwandlungstemperaturen $X \rightarrow S_c^*$ | $S_c^* \rightarrow S_A^*$ | $S_A^* \rightarrow N^*$ | $N^* \rightarrow I$ |
|---|---|---|---|---|---|---|---|---|---|
| | Mol-% | Mol-% | | µs | $nC \cdot cm^{-2}$ | °C | °C | °C | °C |
| 7a | 94 | 0 | 6,4 | 75 | -10 | -1 | 80 | 85 | 99 |
| 7b | 79 | 15 | 4,6 | 65 | -10,5 | -8 | 73 | 79 | 92 |

Die Ergebnisse in der 5. und 7. Spalte zeigen ganz deutlich die Verbesserung der Schaltzeit um 10 µs und des Schmelzpunktes um 7°C mit zunehmender Konzentration der Verbindung der allgemeinen Formel V.

**Beispiel 8**

a) Eine ferroelektrische Mischung bestehend aus folgenden Komponenten

**Mischung aus Beispiel 2a** **94 Mol-%**

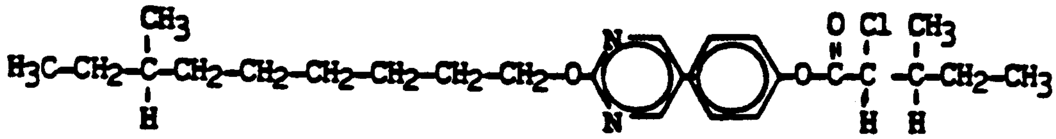

**4-[2-((S)-7-Methyl-nonyloxy)pyrimidin-5-yl]-phenyl-(2S,3S)-2-chlor-3-methyl-pentansäureester** **6 Mol-%**

zeigt die folgenden LC-Bereiche
X -9 $S_c$* 72 $S_A$* 78 N* 93 I
Bei 25 °C weist diese Mischung eine Polarisation von -9 nC•cm$^{-2}$ und bei einem Schaltfeld von 10 Vµm$^{-1}$ eine Schaltzeit von 55 µs auf.

Für einen Vergleich bietet sich eine Mischung an, die auf der Grundmischung von Beispiel 2b aufgebaut ist.

b) Die ferroelektrische Mischung aus

**Mischung aus Beispiel 2b** **94 Mol-%**

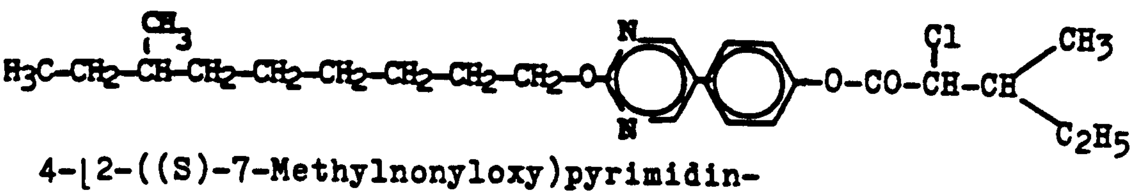

**4-[2-((S)-7-Methylnonyloxy)pyrimidin-5-yl]-phenyl-(2S,3S)-2-chlor-3-methyl-pentansäureester** **6 Mol-%**

zeigt folgende flüssigkristalline Phasenbereiche:
X -7 $S_c$ 79 $S_A$ 84 N 99 I
Bei 25 °C weist diese Mischung eine spontane Polarisation von -9 nC cm$^{-2}$, einen Kontrast von 5,6 und bei einem Schaltfeld von 10 Vµm$^{-1}$ eine Schaltzeit von 60 µs auf.

Diese Mischung enthält im Vergleich zu der Mischung 9a keine Komponente der allgemeinen Formel VI und weist im Vergleich einen um 2 °C höheren Schmelzpunkt und eine um 5 µs längere Schaltzeit auf.

**Beispiel 9**

Eine ferroelektrische Mischung bestehend aus den folgenden vier Komponenten

Mischung aus Beispiel 2b 64 Mol-%

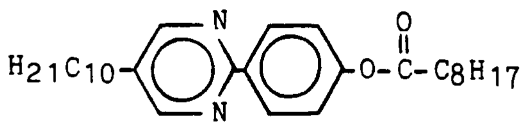

15 Mol-%

Nonansäure-4-(decylpyrimidin-2-yl)-phenylester
(Verbindung der allgemeinen Formel V)

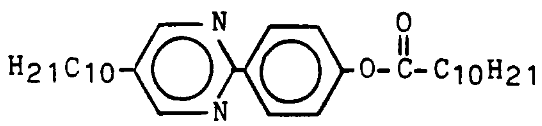

15 Mol-%

Undecansäure-4-(5-decylpyrimidin-2-yl)-phenylester
(Verbindung der allgemeinen Formel V)

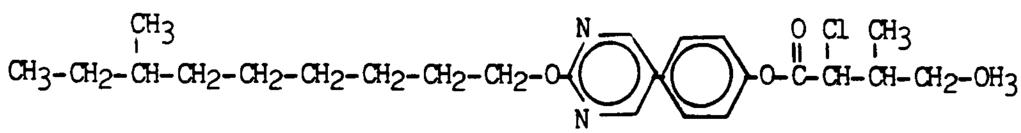

6 Mol-%

**4-[2-((S)-7-Methylnonyloxy)pyrimidin-5-yl]-phenyl-(2S,3S)-2-chlor-3-methyl-pentansäureester**

zeigt folgende flüssigkristalline Phasenbereiche:
X -11 $S_c$* 75 $S_A$* 90 N* 85 I
Bei 25 °C weist diese Mischung eine Polarisation von -8,7 nC•cm$^{-2}$, einen Kontrast von 6,6 und bei einem Schaltfeld von 10 Vμm$^{-1}$ eine Schaltzeit von 50 μs auf.

Im Vergleich zu der Mischung 8b, die sich von der Mischung 9 nur dadurch unterscheidet, daß sie keine Verbindung der allgemeinen Formel V enthält, weist die Mischung 9 einen um 18 % höheren Kontrast, einen um 4 °C niedrigeren Schmelzpunkt und eine um 10 μs kürzere Schaltzeit auf.

**Beispiel 10**

Eine ferroelektrische Mischung bestehend aus folgenden Komponenten

Mischung aus Beispiel 2a — 89 Mol-%

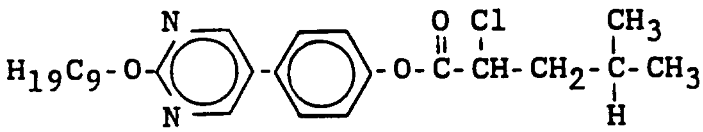

5 Mol-%

4-(2-Nonyloxypyrimidin-5-yl)-phenyl-2-chlor-4-methyl-pentansäureester (Racemat)
(Verbindung der allgemeinen Formel IX)

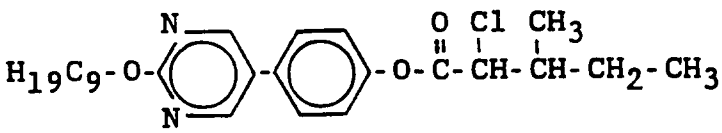

6 Mol-%

4-(2-Nonyloxypyrimidin-5-yl)-phenyl-(2S,3S)-2-chlor-3-methylpentansäureester

besitzt die Phasenfolge
X -9 $S_c$* 72 $S_A$* 77 N* 88 I
Bei 25 °C weist diese Mischung eine Polarisation von -8,7 nC $cm^{-2}$ einen Kontrast von 8 und bei einem Schaltfeld von 10 V$\mu m^{-1}$ eine Schaltzeit von 60 $\mu s$ auf.

Im Vergleich zu der ferroelektrischen Mischung von Beispiel 7b ist der Kontrast um 45 % höher. Die Zugabe des racemischen $\alpha$-Chlorcarbonsäureesters führt also zu einer Erhöhung des Kontrastes und zur Erniedrigung des Schmelzpunkts um 1 °C.

**Beispiel 11**

a) Eine ferroelektrische Mischung bestehend aus folgenden Komponenten

Mischung aus Beispiel 3a — 88 Mol-%

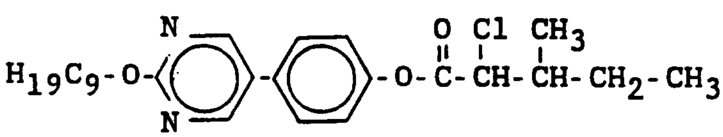

12 Mol-%

4-(2-Nonyloxypyrimidin-5-yl)-phenyl-(2S,3S)-2-chlor-3-methylpentansäureester

besitzt die Phasenfolge
X -7 $S_c$* 68 $S_A$* 74 N* 85 I
Bei 25 °C weist diese Mischung eine Polarisation von -20 nC•$cm^{-2}$, einen Kontrast von 8,2 und bei einem Schaltfeld von 10 V$\mu m^{-1}$ eine Schaltzeit von 18 $\mu s$ auf.

b) Eine ferroelektrische Mischung bestehend aus

**Mischung aus Beispiel 3a** **85 Mol-%**

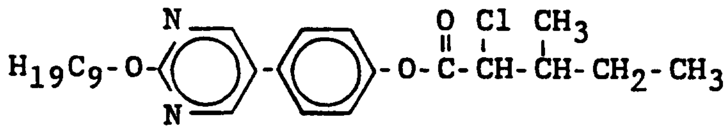

**12 Mol-%**

**4-(2-Nonyloxypyrimidin-5-yl)-phenyl-(2S,3S)-2-chlor-3-methylpentansäureester**

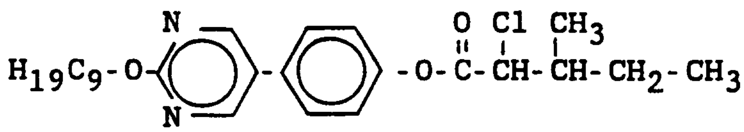

**4-(2-Nonyloxypyrimidin-5-yl)-phenyl-2-chlor-4-methyl-pentansäureester (Racemat)** **3 Mol-%**

besitzt die Phasenfolge
X -8 $S_c$* 68 $S_A$* 75 N* 85,5 I
Bei 25 °C weist diese Mischung eine Polarisation von -20 nC•cm$^{-2}$ einen Kontrast von 8,9 und bei einem Schaltfeld von 10 Vµm$^{-1}$ eine Schaltzeit von 17 µs auf. Im Vergleich zu der ferroelektrischen Mischung in Beispiell 11a ist der Kontrast höher. Die Zugabe des racemischen α-Chlorcarbonsäureesters führt also zu einer Erhöhung des Kontrasts um 9 %.

**Beispiele 12a - c**

Folgende ferroelektrische Mischungen bestehen aus folgenden Komponenten
X Mol-% der Mischung aus Beispiel 3a
Y Mol-% der racemischen Mischung des

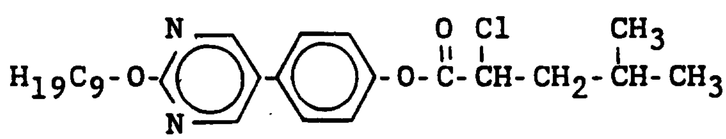

4-(3-Nonyloxypyrimidin-5-yl)-phenyl-2-chlor-4-methyl-pentansäureester
6 Mol-% 4-(2-Nonyloxypyrimidin-5-yl)-phenyl-(2S,3S)-2-chlor-3-methylpentansäureester

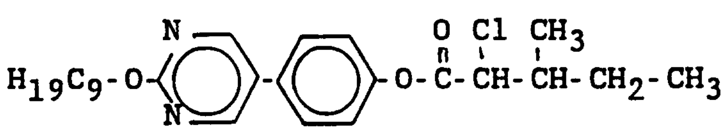

In der nachfolgenden Tabelle 2 sind die Eigenschaftsmerkmale (bei 25 °C) der Beispiele zusammengefaßt worden.

**Tabelle 2**

| Bei-spiel | Konzentration X | Konzentration Y | Kontrast K | Schaltzeit $\tau$ | Polarisation $P_s$ | Phasenumwandlungstemperaturen $X \rightarrow S_c^*$ | $S_c^* \rightarrow S_A^*$ | $S_A^* \rightarrow N^*$ | $N^* \rightarrow I$ |
|---|---|---|---|---|---|---|---|---|---|
| | Mol-% | Mol-% | | µs | $nC \cdot cm^{-2}$ | °C | °C | °C | °C |
| 12a | 94 | 0 | 4,5 | 43 | -9,8 | -6 | 70 | 77 | 86 |
| 12b | 91 | 3 | 4,6 | 44 | -9,6 | -5,3 | 69 | 77 | 85 |
| 12c | 88 | 6 | 5,8 | 45 | -9,2 | -5,5 | 68 | 76 | 84 |

Die Ergebnisse in der 3. und 4. Spalte zeigen ganz deutlich die Verbesserung des Kontrastes mit der Zunahme der Konzentration an der racemischen Mischung des α-Chlorcarbonsäureesters (Y).

**Beispiele 13a - c**

Folgende ferroelektrische Mischungen bestehen aus folgenden Komponenten
X Mol-% der Mischung aus Beispiel 1a

Y Mol-% der racemischen Mischung des

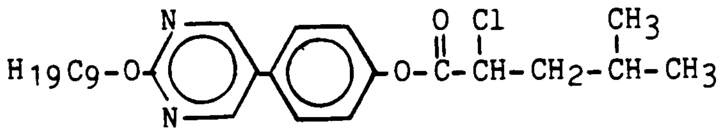

4-(2-Nonyloxypyrimidin-5-yl)-phenyl-2-chlor-4-methyl-pentansäureester

6 Mol-% 4-(2-Octyloxypyrimidin-5-yl)-phenyl-(2S,3S)-2-chlor-3-methylpentansäureester

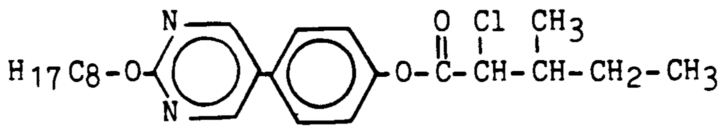

In der nachstehenden Tabelle 3 sind die Eigenschaftsmerkmale (bei 25 ° C) der Beispiele zusammengefaßt wiedergegeben.

Tabelle 3

| Beispiel | Konzentration X | Konzentration Y | Kontrast K | Schaltzeit $\tau$ | Polarisation $P_s$ | Phasenumwandlungstemperaturen $X \to S_c^*$ | $S_c^* \to S_A^*$ | $S_A^* \to N^*$ | $N^* \to I$ |
|---|---|---|---|---|---|---|---|---|---|
| | Mol-% | Mol-% | | µs | $nC \cdot cm^{-2}$ | °C | °C | °C | °C |
| 13a | 94 | 0 | 4,5 | 43 | -9,8 | -6 | 71 | 78 | 89 |
| 13b | 91 | 3 | 4,7 | 52 | -9,5 | -6 | 71 | 77 | 88 |
| 13c | 88 | 6 | 6,2 | 53 | -9,2 | -6 | 70 | 77 | 86 |

Die Ergebnisse in der 3. und 4. Spalte zeigen ganz deutlich die Verbesserung des Kontrastes mit der Zunahme der Konzentration an der racemischen Mischung des α-Chlorcarbonsäureesters (Y).

**Beispiel 14**

a) Eine flüssigkristalline Mischung bestehend aus folgenden fünf Komponenten

| | |
|---|---|
| 5-Octyloxy-2-(4-decyloxy-phenyl)-pyrimidin | 21 Mol-% |
| 5-Octyloxy-2-(4-octyloxy-phenyl)-pyrimidin | 12 Mol-% |
| 5-Octyloxy-2-(4-hexyloxy-phenyl)-pyrimidin | 25 Mol-% |
| 5-Octyloxy-2-(4-butyloxy-phenyl)-pyrimidin | 27 Mol-% |
| 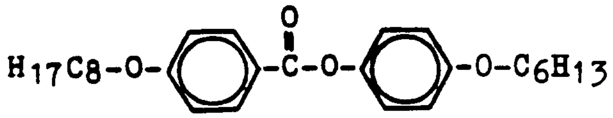 | 15 Mol-% |

4-Octyloxybenzoesäure-4'-hexyloxyphenylester
(= Verbindung der allgemeinen Formel VII)

weist folgende flüssigkristallinen Phasenbereiche auf:
X 8 $S_c$ 72,3 $S_A$ 86,1 N 93 I
b) Eine Mischung ohne Zusatz von 15 Mol-% der Verbindung der allgemeinen Formel (VII) weist demgegenüber folgende flüssigkristalline Phasenbereiche auf:
X 13 $S_c$ 81,5 $S_A$ 95,5 N 98 I
Die erfindungsgemäße Mischung 14a enthält im Vergleich zu der Mischung 14b zusätzlich eine Komponente der allgemeinen Formel (VII) und weist im Vergleich einen um 5 °C niedrigeren Schmelzpunkt und eine um 9,5 °C niedrigere obere $S_c$-Phasenbereichsgrenztemperatur auf.

**Beispiel 15**

Eine flüssigkristalline Mischung bestehend aus den folgenden fünf Komponenten

| | |
|---|---|
| Mischung aus Beispiel 14b | 80 Mol-% |
| 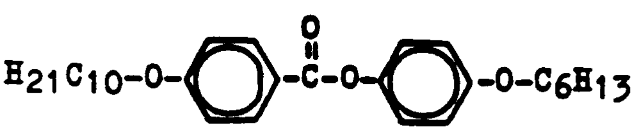 | 20 Mol-% |

4-Hexyloxyphenyl-4'-decyloxybenzoesäureester
(Verbindung der allgemeinen Formel VII)

weist die folgenden flüssigkristallinen Phasenbereiche auf:
X 9 $S_c$ 72,6 $S_A$ 87,3 N 92,5 I
Diese Mischung enthält im Vergleich zu der Mischung 14b zusätzlich eine Komponente der allgemeinen Formel (VII) und weist im Vergleich einen um 4 °C niedrigeren Schmelzpunkt und eine um 9 °C niedrigere $S_c$-Phasenbereichsgrenztemperatur auf.

**Beispiel 16**

Eine flüssigkristalline Mischung bestehend aus den folgenden sechs Komponenten

| | |
|---|---|
| 5-Octyloxy-2-(4-decyloxy-phenyl)-pyrimidin | 20 Mol-% |
| 5-Octyloxy-2-(4-octyloxy-phenyl)-pyrimidin | 11 Mol-% |
| 5-Octyloxy-2-(4-hexyloxy-phenyl)-pyrimidin | 24 Mol-% |
| 5-Octyloxy-2-(4-butyloxy-phenyl)-pyrimidin | 25 Mol-% |
| 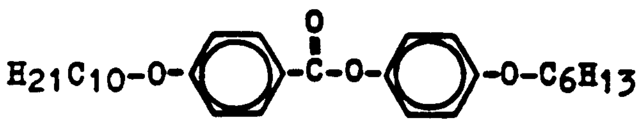 | 9 Mol-% |

4-Hexyloxyphenyl-4'-decyloxybenzoesäureester
(Verbindung der allgemeinen Formel VII)

| | |
|---|---|
| 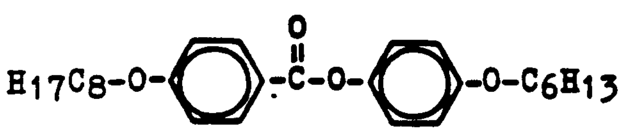 | 11 Mol-% |

4-Hexyloxyphenyl-4-octyloxybenzoesäureester
(Verbindung der allgemeinen Formel VII)

weist folgende flüssigkristalline Bereiche auf:
X 6 $S_c$ 72,3 $S_A$ 85,2 N 92 I

b) Eine vierkomponentige Mischung, die sich von der Flüssigkristallmischung 16a nur dadurch unterscheidet, daß sie keine Verbindung der allgemeinen Formel (VII) enthält, weist folgende flüssigkristallinen Phasenbereiche auf:
X 13 $S_c$ 81,5 $S_A$ 95,5 N 98 I
Die erfindungsgemäße Mischung 16a weist im Vergleich zu der Mischung 16b einen um 7 ° C niedrigeren Schmelzpunkt und eine um 9 ° C niedrigere obere $S_c$-Phasenbereichsgrenztemperatur auf.

**Beispiel 17**

Eine ferroelektrische Mischung bestehend aus den folgenden Komponenten

Mischung aus Beispiel 3a 82 Mol-%

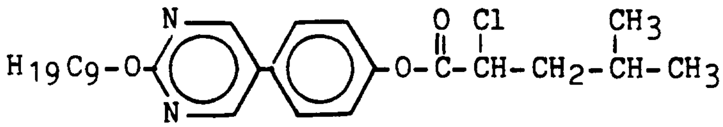

3 Mol-%

Racemat des 4-(2-Nonyloxypyrimidin-5-yl)-phenyl-2-chlor-4-methyl-pentansäureester

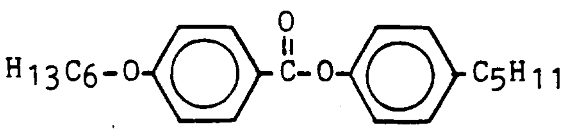

9 Mol-%

4-Pentylphenyl-4'-hexyloxybenzoesäureester (Verbindung der allgemeinen Formel VIII)

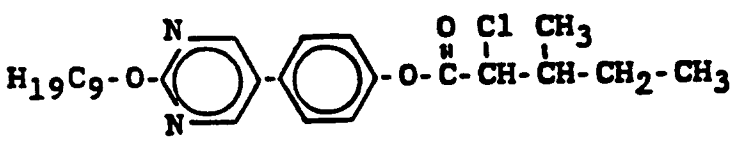

**4-(2-Nonyloxypyrimidin-5-yl)-phenyl-(2S,3S)-2-chlor-3-methylpentansäureester** **6 Mol-%**

besitzt folgende LC-Bereiche
X -9 $S_c^*$ 61 $S_A^*$ 70 $N^*$ 85 I
Bei 20 °C weist diese Mischung eine Polarisation von -8,2 nC $cm^{-2}$ eine Kontrast von 5,7 und in einem Schaltfeld von 10 $V\mu m^{-1}$ eine Schaltzeit von 54 $\mu s$ auf. Der Vergleich mit der Mischung aus Beispiel 12b belegt, daß die Zugabe des Esters der allgemeinen Formel (VIII) den Schmelzpunkt um 4 °C erniedrigt und den Kontrast um 24 % erhöht.

**Beispiel 18**

a) Eine flüssigkristalline Mischung aus den folgenden neun Komponenten

| | |
|---|---|
| 5-Octyloxy-2-(4-hexyloxy-phenyl)-pyrimidin | 14 Mol-% |
| 5-Octyloxy-2-(4-octyloxy-phenyl)-pyrimidin | 5 Mol-% |
| 5-Octyloxy-2-(4-butyloxy-phenyl)-pyrimidin | 15 Mol-% |
| 5-Octyloxy-2-(4-decyloxy-phenyl)-pyrimidin | 8 Mol-% |
| 5-Octyloxy-2-(4-dodecyloxy-phenyl)-pyrimidin | 8 Mol-% |
| 5-Octyl-2-(4-dodecyloxy-phenyl)-pyrimidin | 13 Mol-% |
| trans-4-Pentyl-cyclohexancarbonsäure-(4-(5-decyl-pyrimidin-2-yl)]-phenylester | 17 Mol-% |

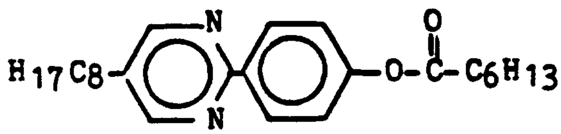

13 Mol-%

Heptylsäure-4-(5-Octylpyrimidin-2-yl)]-phenylester
(Verbindung der allgemeinen Formel V)

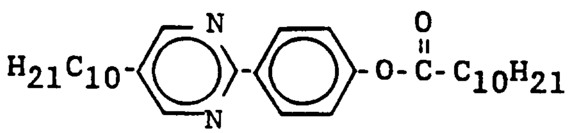

7 Mol-%

Undecylsäure-4-(10-decyl-pyrimidin-2-yl)-phenylester
(Verbindung der allgemeinen Formel V)

zeigt folgende flüssigkristalline Phasenbereiche:
X -3 $S_c$ 73 $S_A$ 81 N 94 I
b) Eine vergleichbare Mischung, die sich von der Mischung 18a nur dadurch unterscheidet, daß sie keine Komponente der allgemeinen Formel (VI) enthält, weist die folgenden flüssigkristallinen Phasenbereiche auf:
X -1 $S_c$ 81 $S_A$ 87 N 103 I
Die erfindungsgemäße Mischung weist also einen um 2 °C niedrigeren Schmelzpunkt und eine um 8 °C niedrigere obere $S_c$-Phasenbereichsgrenztemperatur auf.

**Beispiel 19**

Eine ferroelektrische flüssigkristalline Mischung bestehend aus den folgenden zehn Komponenten

| | |
|---|---|
| 5-Octyloxy-2-(4-butyloxy-phenyl)-pyrimidin | 13,2 Mol-% |
| 5-Octyloxy-2-(4-hexyloxy-phenyl)-pyrimidin | 14 Mol-% |
| 5-Octyloxy-2-(4-octyloxy-phenyl)-pyrimidin | 5,5 Mol-% |
| 5-Octyloxy-2-(4-decyloxy-phenyl)-pyrimidin | 7 Mol-% |
| 5-Octyloxy-2-(4-dodecyloxy-phenyl)-pyrimidin | 7 Mol-% |
| trans-4-Pentyl-cyclohexancarbonsäure-[4-(5-decyl-pyrimidin-2-yl)]-phenylester | 16,7 Mol-% |
| 5-Octyl-2-(4-dodecyloxyphenyl)-pyrimidin | 11,4 Mol-% |
| Heptansäure-[4-(5'-Octylpyrimidin-2-yl)]-phenylester | 13,2 Mol-% |
| 4-(2-Nonyloxypyrimidin-5-yl)-phenyl-2-fluor-4-methyl-pentansäureester | 6 Mol-% |
| (Verbindung der allgemeinen Formel IX) | 6 Mol-% |
| 4-(2-Nonyloxypyrimidin-5-yl)-phenyl-(2S,3S)-2-chlor-3-methylpentansäureester | |

zeigt folgende flüssigkristalline Phasenbereiche:
X -8 $S_c$* 73 $S_A$* 80 N* 90 I
und weist bei 25 °C eine spontane Polarisation von 9,4 nC•cm$^{-2}$, einen Kontrast von 5,8 und eine Schaltzeit von 65 $\mu$s auf.

Im Vergleich dazu weist die beanspruchte ferroelektrische-FLC-Mischung aus Beispiel 7a, die sich von der obengenannten ferroelektrischen Mischung nur dadurch unterscheidet, daß sie kein Racemat (IX) enthält, folgende Phasenbereiche auf:
X -1 $S_c$* 80 $S_A$* 85 N* 99 I
Die obengenannte ferroelektrische Mischung weist dazu im Vergleich einen um 7 °C niedrigeren Schmelzpunkt auf.

**Beispiel 20**

a) Eine flüssigkristalline Mischung aus den folgenden sechs Komponenten

| | |
|---|---|
| 5-Octyloxy-2-(4-hexyloxy-phenyl)-pyrimidin | 20,2 Mol-% |
| 5-Octyloxy-2-(4-octyloxy-phenyl)-pyrimidin | 9,4 Mol-% |
| 5-Octyloxy-2-(4-butyloxy-phenyl)-pyrimidin | 21,4 Mol-% |
| 5-Octyloxy-2-(4-decyloxy-phenyl)-pyrimidin | 17 Mol-% |
| trans-4-Pentyl-cyclohexancarbonsäure-[4-(5-decyl-pyrimidin-2-yl)]-phenylester | 12 Mol-% |
| 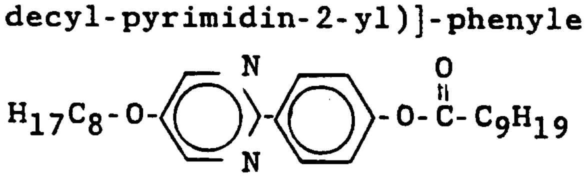 | 20 Mol-% |

Dekansäure-[4-(5'-Octyloxypyrimidin-2-yl)]-phenylester
(= Verbindung der allgemeinen Formel VI)

zeigt folgende flüssigkristalline Phasenbereiche:
X 8 $S_c$ 80 $S_A$ 92 N 100 I

b) Für den Vergleich der physikalischen Eigenschaften bietet sich die folgende, in DE 38 31 226.3 beanspruchte Mischung an, die sich von der Mischung 20a nur dadurch unterscheidet, daß sie keine Komponente der allgemeinen Formel (VI) enthält. Diese Mischung aus fünf Komponenten weist die folgenden flüssigkristallinen Phasenbereiche auf:
X 10 $S_c$ 84 $S_A$ 93 N 105 I

Die erfindungsgemäße Mischung 20a weist im Vergleich zu der Mischung 1b einen um 2 °C niedrigeren Schmelzpunkt (X) und eine um 4 °C niedrigere obere $S_c$-Phasenbereichsgrenztemperatur auf.

## Patentansprüche

1. Flüssigkristalline Mischung, enthaltend als Komponente A mindestens zwei 5-Alkoxy-2-(alkyloxy-phenyl)-pyrimidine der allgemeinen Formel (I)

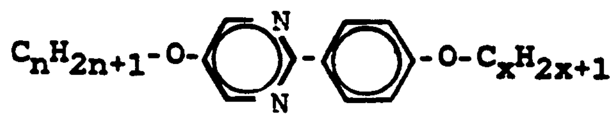 (I),

in der die Alkylreste geradkettige Alkylreste sind, in denen n eine ganze Zahl von 6 bis 14 und x eine ganze Zahl von 2 bis 14 bedeutet,
und gegebenenfalls einen oder mehrere Cyclohexanoarbonsäureester der allgemeinen Formel (II)

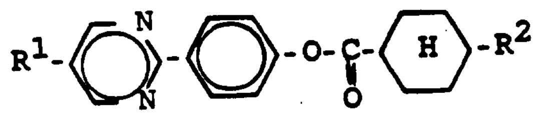 (II),

in der $R^1$ einen Alkylrest mit 10 bis 16 C-Atomen oder einen Alkyloxyrest mit 8 bis 14 C-Atomen und $R^2$ einen Alkylrest mit 2 bis 9 C-Atomen bedeutet,
und gegebenenfalls ein oder mehrere Alkenyloxy-phenyl-pyrimidin-Derivate der allgemeinen Formel (III)

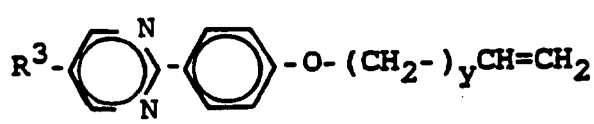 (III)

in der $R^3$ eine Alkylkette mit 7 bis 16 C-Atomen oder eine Alkyloxykette mit 6 bis 14 C-Atomen und y eine ganze Zahl von 4 bis 14 bedeutet,
und gegebenenfalls ein oder mehrere Alkyl-pyrimidin-alkoxy-phenyl-Derivate der allgemeinen Formel (IV)

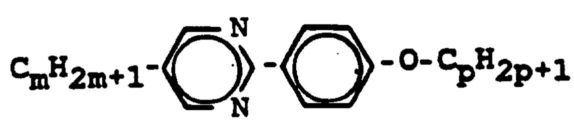 (IV)

in der m und p unabhängig voneinander ganze Zahlen von 6 bis 14 sind,
sowie gegebenenfalls als Komponente B (für ferroelektrische Flüssigkristallmischungen) mindestens eine optisch aktive Verbindung aus der Gruppe

a) optisch aktive Ester aus $\alpha$-Chlorcarbonsäuren und mesogenen Phenolen,
b) optisch aktive Ester des N-Acylprolins,

c) optisch aktive Ester von 1,3-Dioxolan-4-carbonsäuren,

d) optisch aktive Ester von Oxiran-2-carbonsäuren

dadurch gekennzeichnet, daß die Flüssigkristall-Mischungen ferner mindestens einen Carbonsäureester C der allgemeinen Formeln (V), (VI), (VII), (VIII) oder (IX) als Mischungskomponente enthalten:

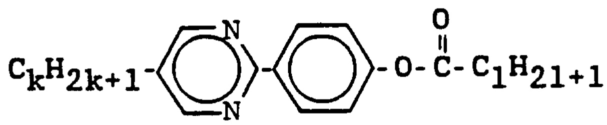

(V),

wobei
k eine ganze Zahl von 6 bis 14 und
l eine ganze Zahl von 2 bis 14 bedeuten kann,

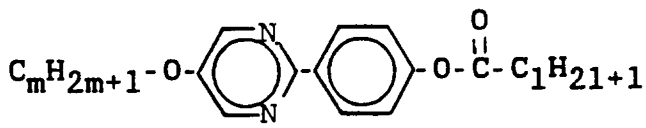

(VI),

wobei
m eine ganze Zahl von 5 bis 14 und
l eine ganze Zahl von 2 bis 14 bedeuten kann,

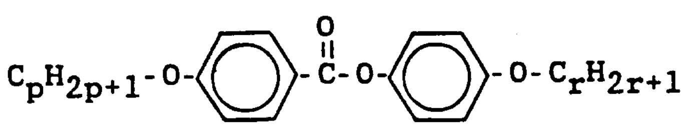

(VII),

wobei
p eine ganze Zahl von 7 bis 14 und
r eine ganze Zahl von 4 bis 14 bedeuten kann,

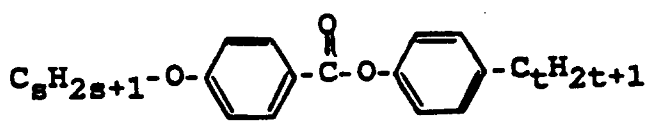

(VIII),

wobei
s eine ganze Zahl von 6 bis 14 und
t eine ganze Zahl von 6 bis 14 bedeuten kann,

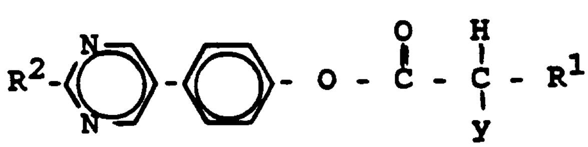

(IX),

wobei

$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,

Y = F, Cl, Br, CN oder $CF_3$ und

$R^1$ = verzweigtes ($C_3$-$C_9$)-Alkyl, Benzyl oder Phenyl.

2. Flüssigkristalline Mischung nach Anspruch 1, dadurch gekennzeichnet, daß sie als Komponente C einen oder mehrere Carbonsäure-4-(5-alkyl-pyrimidin-2-yl)-phenylester der allgemeinen Formel (V) enthält

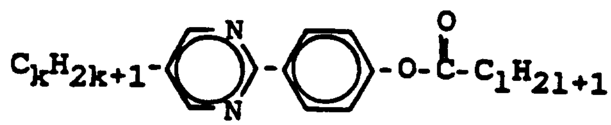

(V),

wobei
k eine ganze Zahl von 6 bis 14 und
l eine ganze Zahl von 4 bis 14 bedeuten kann.

3. Flüssigkristalline Mischung nach Anspruch 1, dadurch gekennzeichnet, daß sie als Komponente C einen oder mehrere Carbonsäure-4-(5-alkoxy-pyrimidin-2-yl)-phenylester der allgemeinen Struktur (VI) enthält

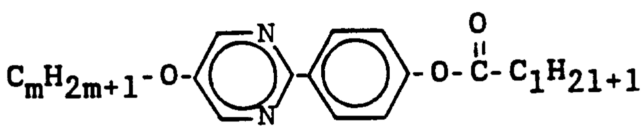

(VI),

wobei
m eine ganze Zahl von 6 bis 14 und
l eine ganze Zahl von 4 bis 14 bedeuten kann.

4. Flüssigkristalline Mischung nach Anspruch 1, dadurch gekennzeichnet, daß sie als Komponente C einen oder mehrere Benzoesäureester der allgemeinen Struktur (VII) enthält

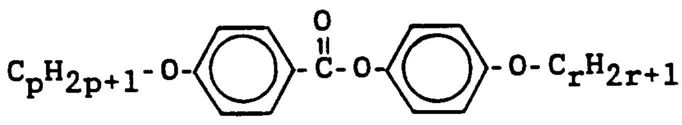

(VII),

wobei
p eine ganze Zahl von 7 bis 14 und
r eine ganze Zahl von 4 bis 14 bedeuten kann.

5. Flüssigkristalline Mischung nach Anspruch 1, dadurch gekennzeichnet, daß sie als Komponente C einen oder mehrere Benzoesäureester der allgemeinen Struktur (VIII) enthält

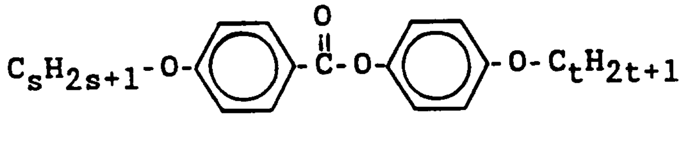

(VIII),

wobei
s eine ganze Zahl von 6 bis 14 und
t eine ganze Zahl von 6 bis 14 bedeuten kann.

**6.** Flüssigkristalline Mischung nach Anspruch 1, dadurch gekennzeichnet, daß sie als Komponente C das racemische Gemisch eines oder mehrerer der folgenden Carbonsäureester der allgemeinen Struktur (IX) enthält

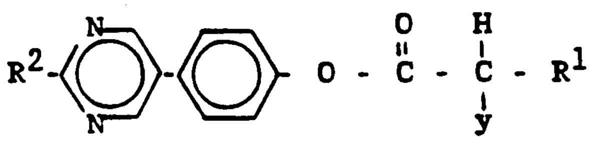

(IX)

wobei

$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können,

y = F, Cl, und

$R^1$ = verzweigtes ($C_3$-$C_9$)-Alkyl, Benzyl oder Phenyl.

**7.** Flüssigkristalline Mischung nach Anspruch 1, dadurch gekennzeichnet, daß sie als Komponente C das racemische Gemisch eines oder mehrerer der folgenden Carbonsäureester der allgemeinen Struktur (IXa) enthält

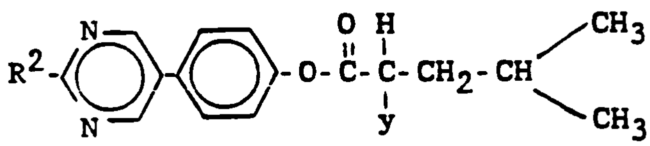

(IXa)

wobei

$R^2$ = geradkettiges oder verzweigtes ($C_1$-$C_{12}$)-Alkyl oder Alkenyl, wobei eine oder zwei nichtbenachbarte $CH_2$-Gruppen durch O- und/oder S-Atome ersetzt sein können und

y = F, Cl.

**8.** Flüssigkristalline Mischung nach Anspruch 1, dadurch gekennzeichnet, daß sie als Komponente C das Racemat des folgenden Esters (IXb) enthält

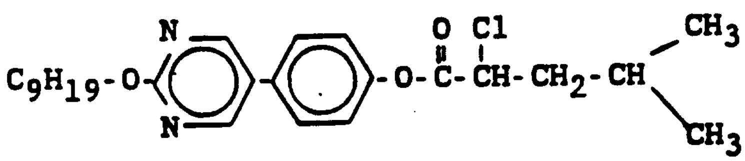

(IXb).

**9.** Flüssigkristalline Mischung nach Anspruch 1, dadurch gekennzeichnet, daß sie als Komponente C das Racemat des folgenden Esters (IXc) enthält

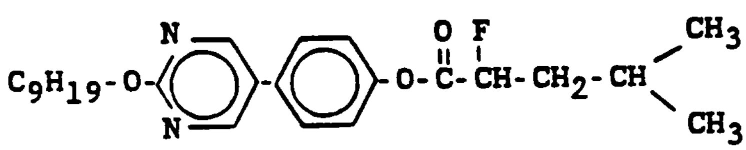

(IXc).

**10.** Flüssigkristalline Mischung nach einem der Ansprüche 6 bis 9, dadurch gekennzeichnet, daß sie als Komponente C 2 bis 20 mol-% eines oder mehrerer der racemischen α-substituierten Carbonsäureester enthält.

**11.** Flüssigkristalline Mischung nach Anspruch 1, dadurch gekennzeichnet, daß sie als Komponente C 2 bis 40 mol-% einer oder mehrerer der Mischungskomponenten der allgemeinen Formel (V) und/oder (VI) und/oder (VII) und/oder (VIII) enthält.

**12.** Elektro-optisches Bauteil, enthaltend eine flüssigkristalline Mischung nach einem der Ansprüche 1 bis 11.

**13.** Verwendung von Flüssigkristall-Mischungen nach einem der Ansprüche 1 bis 11 in elektrooptischem Schalt- und Anzeigeelementen.

## Claims

**1.** A liquid-crystalline mixture containing, as component A, at least two 5-alkoxy-2-(alkoxyphenyl)-pyrimidines of the formula (I)

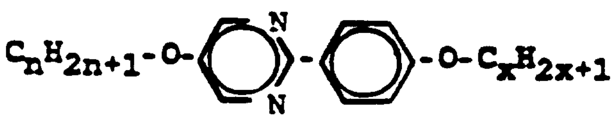

(I)

in which the alkyl radicals are straight-chain alkyl radicals in which n is an integer from 6 to 14 and x is an integer from 2 to 14,
and, if appropriate, one or more cyclohexanecarboxylates of the formula (II)

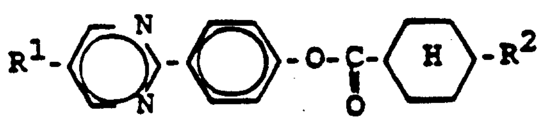

(II)

in which $R^1$ is an alkyl radical having 10 to 16 carbon atoms or an alkoxy radical having 8 to 14 carbon atoms, and $R^2$ is an alkyl radical having 2 to 9 carbon atoms, and, if appropriate, one or more alkenyloxyphenyl-pyrimidine derivatives of the formula (III)

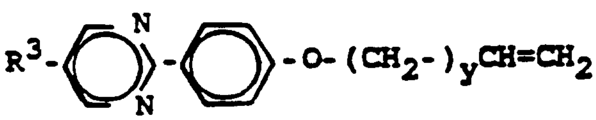

(III)

in which $R^3$ is an alkyl chain having 7 to 16 carbon atoms or an alkoxy chain having 6 to 14 carbon atoms, and y is an integer from 4 to 14,
and, if appropriate, one or more alkylpyrimidine alkoxyphenyl derivatives of the formula (IV)

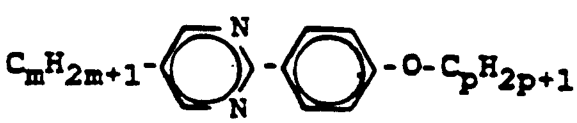

(IV)

in which m and p, independently of one another, are integers from 6 to 14,
and if appropriate as component B (for ferroelectric liquid-crystal mixtures), at least one optically active compound from the group

a) optically active esters made from α-chlorocarboxylic acids and mesogenic phenols,
b) optically active esters of N-acylproline,
c) optically active esters of 1,3-dioxolane-4-carboxylic acids,

d) optically active esters of oxirane-2-carboxylic acids,

wherein the liquid-crystal mixture furthermore contains at least one carboxylate C of the formula (V), (VI), (VII), (VIII) or (IX) as a mixture component:

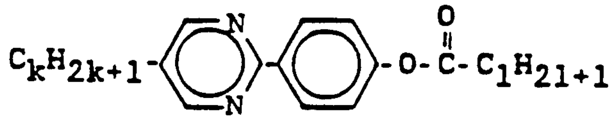

(V)

where
k may be an integer from 6 to 14, and
l may be an integer from 2 to 14,

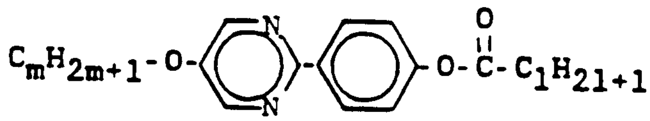

(VI)

where
m may be an integer from 5 to 14, and
l may be an integer from 2 to 14,

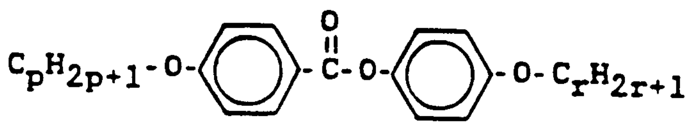

(VII)

where
p may be an integer from 7 to 14, and
r may be an integer from 4 to 14,

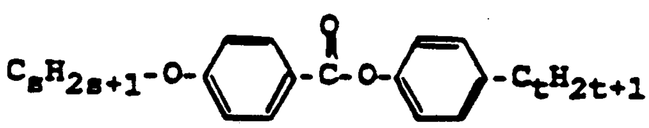

(VIII)

where
s may be an integer from 6 to 14, and
t may be an integer from 6 to 14,

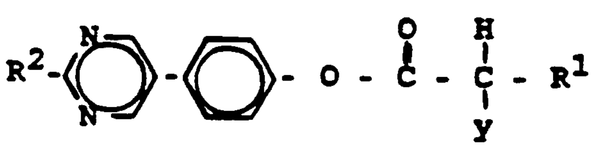

(IX)

where

$R^2$ is straight-chain or branched ($C_1$-$C_{12}$)alkyl or alkenyl, it being possible for one or two non-adjacent $CH_2$ groups to be replaced by O and/or S atoms,

y is F, Cl, Br, CN or $CF_3$ and

$R^1$ is branched ($C_3$-$C_9$)alkyl, benzyl or phenyl.

2. A liquid-crystalline mixture as claimed in claim 1, which contains, as component C, one or more 4-(5-alkyl-pyrimidin-2-yl)phenyl carboxylates of the formula (V)

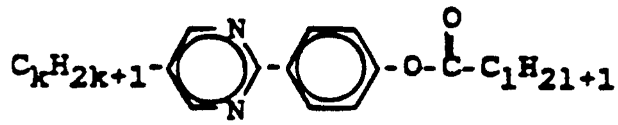

(V)

where
k may be an integer from 6 to 14, and
l may be an integer from 4 to 14.

3. A liquid-crystalline mixture as claimed in claim 1, which contains, as component C, one or more 4-(5-alkoxy-pyrimidin-2-yl)phenyl carboxylates of the structure (VI)

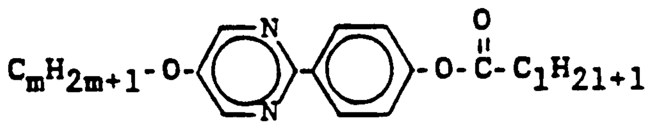

(VI)

where
m may be an integer from 6 to 14, and
l may be an integer from 4 to 14.

4. A liquid-crystalline mixture as claimed in claim 1, which contains, as component C, one or more benzoates of the structure (VII)

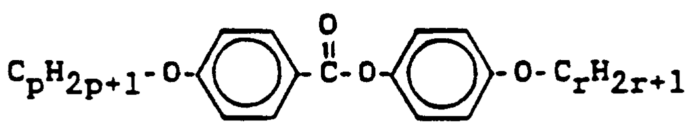

(VII)

where
p may be an integer from 7 to 14, and
r may be an integer from 4 to 14.

5. A liquid-crystalline mixture as claimed in claim 1, which contains, as component C, one or more benzoates of the structure (VIII)

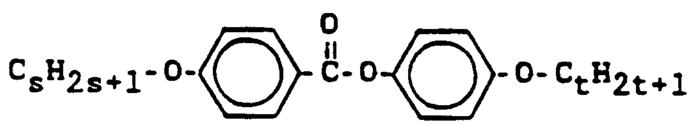

(VIII)

where
s may be an integer from 6 to 14, and
t may be an integer from 6 to 14.

6. A liquid-crystalline mixture as claimed in claim 1, which contains, as component C, the racemic mixture of one or more of the following carboxylates of the structure (IX)

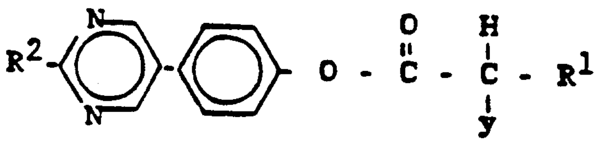

(IX)

where

$R^2$ is straight-chain or branched ($C_1$-$C_{12}$)alkyl or alkenyl, it being possible for one or two non-adjacent $CH_2$ groups to be replaced by O and/or S atoms,

y is F or Cl and

$R^1$ is branched ($C_3$-$C_9$)alkyl, benzyl or phenyl.

**7.** A liquid-crystalline mixture as claimed in claim 1, which contains, as component C, the racemic mixture of one or more of the following carboxylates of the structure (IXa)

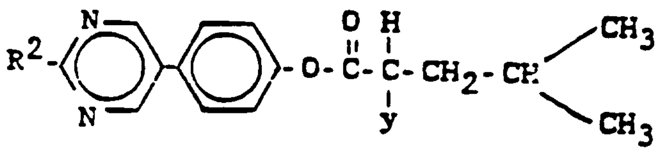

(IXa)

where

$R^2$ is straight-chain or branched ($C_1$-$C_{12}$)alkyl or alkenyl, it being possible for one or two non-adjacent $CH_2$ groups to be replaced by O and/or S atoms, and

y is F or Cl.

**8.** A liquid-crystalline mixture as claimed in claim 1, which contains, as component C, the racemate of the following ester (IXb)

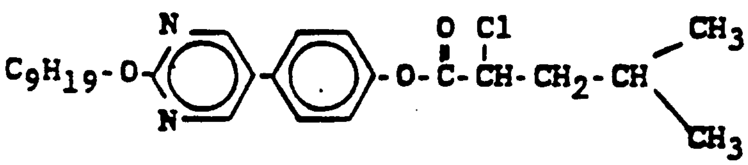

(IXb).

**9.** A liquid-crystalline mixture as claimed in claim 1, which contains, as component C, the racemate of the following ester (IXc)

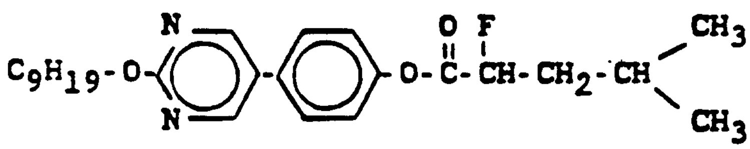

(IXc).

**10.** A liquid-crystalline mixture as claimed in any one of claims 6 to 9, which contains, as component C, 2 to 20 mol-% of one or more of the racemic $\alpha$-substituted carboxylates.

**11.** A liquid-crystalline mixture as claimed in claim 1, which contains, as component C, 2 to 40 mol-% of one or more of the mixture components of the formula (V) and/or (VI) and/or (VII) and/or (VIII).

12. An electrooptical component containing a liquid-crystalline mixture as claimed in any one of claims 1 to 11.

13. The use of a liquid-crystalline mixture as claimed in any one of claims 1 to 11, in electrooptical switching and display elements.

**Revendications**

1. Mélange de cristaux liquides contenant en tant que composants A au moins deux 5-alcoxy-2-(alkyloxy-phényl)-pyrimidines de formule générale (I) :

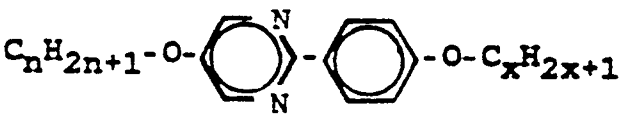

(I)

dans laquelle les radicaux alkyle sont des radicaux alkyle linéaires, dans lesquels n représente un nombre entier de 6 à 14 et x un nombre entier de 2 à 14,
et éventuellement un ou plusieurs esters de l'acide cyclohexane-carboxylique de formule générale (II) :

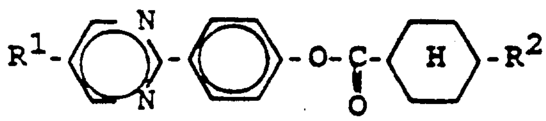

(II)

dans laquelle $R^1$ représente un radical alkyle comportant de 10 à 16 atomes de carbone ou un radical alkyloxy comportant de 8 à 14 atomes de carbone, et $R^2$ représente un radical alkyle comportant de 2 à 9 atomes de carbone, et éventuellement un ou plusieurs dérivés alcényloxy-phényl-pyrimidines de formule générale (III) :

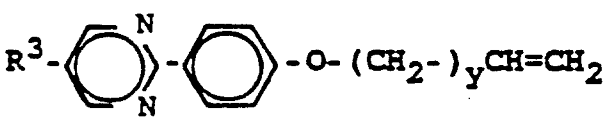

(III)

dans laquelle $R^3$ représente une chaîne alkyle comportant de 7 à 16 atomes de carbone ou une chaîne alkyloxy comportant de 6 à 14 atomes de carbone et y est un nombre entier de 4 à 14,
et éventuellement un ou plusieurs dérivés alkyl-pyrimidine-alcoxy-phényliques de formule générale (IV) :

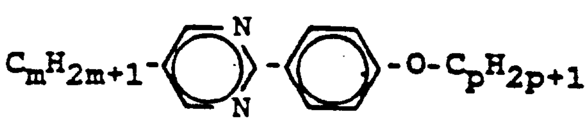

(IV)

dans laquelle m et p indépendamment l'un de l'autre sont des nombres entiers de 6 à 14, ainsi qu'éventuellement en tant que composant B (pour des mélanges de cristaux liquides ferroélectriques) au moins un composé optiquement actif pris dans le groupe comportant les :

a) esters optiquement actifs des acides α-chloro-carboxyliques et phénols mésogènes,
b) esters optiquement actifs de la N-acylproline,
c) esters optiquement actifs des acides 1,3-dioxolanne-4-carboxyliques,

d) esters optiquement actifs des acides oxiranne-2-carboxyliques

caractérisé en ce que les mélanges de cristaux liquides contiennent en outre au moins un ester C d'acides carboxyliques de formules générales (V), (VI), (VII), (VIII) ou (IX) en tant que composant de mélange :

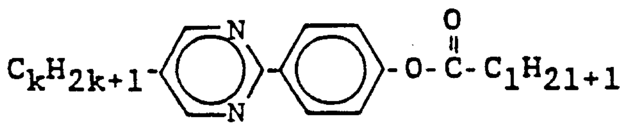

(V)

où

k peut signifier un nombre entier de 6 à 14 et

l peut signifier un nombre entier de 2 à 14,

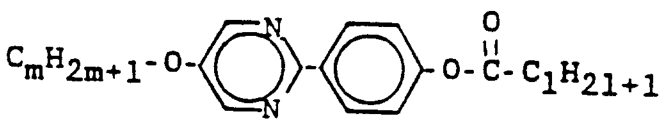

(VI)

où

m peut signifier un nombre entier de 5 à 14 et

l peut signifier un nombre entier de 2 à 14,

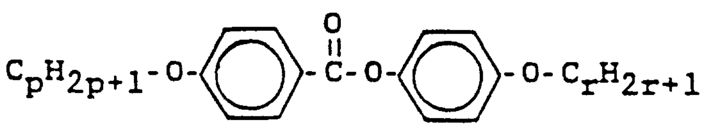

(VII)

où

p peut signifier un nombre entier de 7 à 14 et

r peut signifier un nombre entier de 4 à 14,

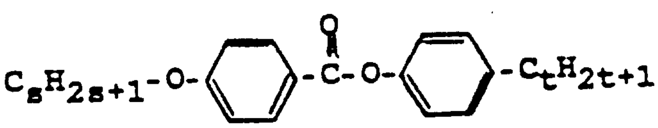

(VIII)

où

s peut signifier un nombre entier de 6 à 14 et

t peut signifier un nombre entier de 6 à 14,

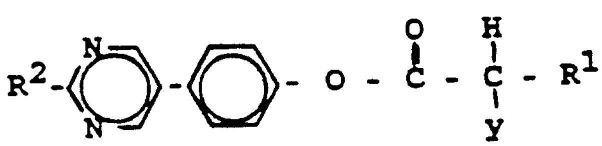

(IX)

où

$R^2$ = un alcényle ou un alkyle en $C_1$-$C_{12}$ linéaire ou ramifié, un ou deux groupes $CH_2$ non voisins pouvant être remplacés par des atomes O et/ou S,

y = F, Cl, Br, CN ou $CF_3$ et

$R^1$ = un alkyle en $C_3$-$C_9$ ramifié, un benzyle ou un phényle.

**2.** Mélange de cristaux liquides selon la revendication 1, caractérisé en ce qu'il contient en tant que composant C un ou plusieurs esters 4-(5-alkyl-pyrimidin-2-yl)-phényliques d'acides carboxyliques de formule générale (V) :

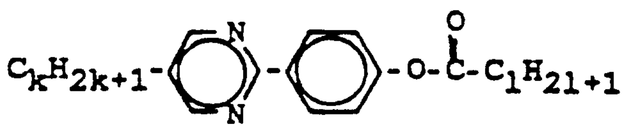

(V)

où

k peut signifier un nombre entier de 6 à 14 et

l peut signifier un nombre entier de 4 à 14.

**3.** Mélange de cristaux liquides selon la revendication 1, caractérisé en ce qu'il contient en tant que composant C un ou plusieurs esters 4-(5-alcoxy-pyrimidin-2-yl)-phényliques d'acides carboxyliques de formule générale (VI) :

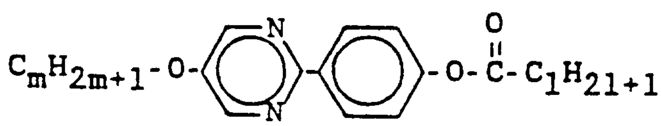

(VI)

où

m peut signifier un nombre entier de 6 à 14 et

l peut signifier un nombre entier de 4 à 14.

**4.** Mélange de cristaux liquides selon la revendication 1, caractérisé en ce qu'il contient en tant que composant C un ou plusieurs esters de l'acide benzoïque de formule générale (VII) :

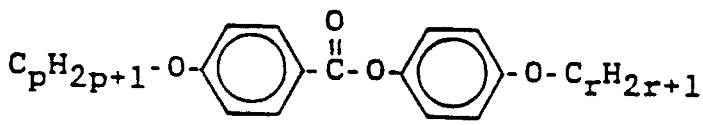

(VII)

où

p peut signifier un nombre entier de 7 à 14 et

r peut signifier un nombre entier de 4 à 14.

**5.** Mélange de cristaux liquides selon la revendication 1, caractérisé en ce qu'il contient en tant que composant C un ou plusieurs esters de l'acide benzoïque de formule générale (VIII) :

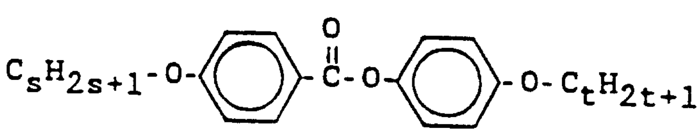

(VIII)

où
s peut signifier un nombre entier de 6 à 14 et
t peut signifier un nombre entier de 6 à 14.

**6.** Mélange de cristaux liquides selon la revendication 1, caractérisé en ce qu'il contient en tant que composant C un mélange racémique d'un ou plusieurs des esters suivants d'acides carboxyliques de formule générale (IX) :

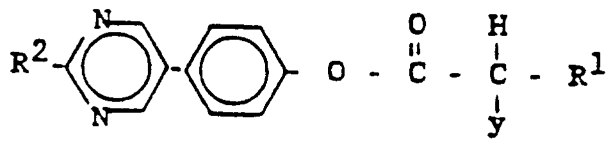

(IX)

où
$R^2$ = un alcényle ou un alkyle en $C_1$-$C_{12}$ linéaire ou ramifié, un ou deux groupes $CH_2$ non voisins pouvant être remplacés par des atomes O et/ou S,
y = F, Cl, et
$R^1$ = un alkyle en $C_3$-$C_9$ ramifié, un benzyle ou un phényle.

**7.** Mélange de cristaux liquides selon la revendication 1, caractérisé en ce qu'il contient en tant que composant C un mélange racémique d'un ou plusieurs des esters suivants d'acides carboxyliques de formule générale (IXa) :

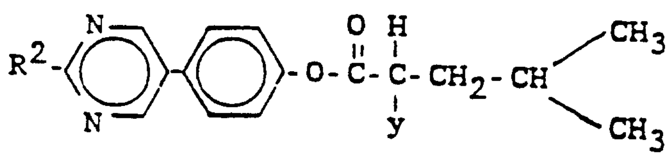

(IXa)

où
$R^2$ = un alcényle ou un alkyle en $C_1$-$C_{12}$ linéaire ou ramifié, un ou deux groupes $CH_2$ non voisins pouvant être remplacés par des atomes O et/ou S, et
y = F, Cl.

**8.** Mélange de cristaux liquides selon la revendication 1, caractérisé en ce qu'il contient en tant que composant C le racémate des esters (IXb) suivants :

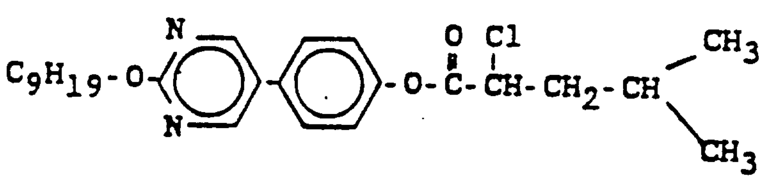

(IXb)

**9.** Mélange de cristaux liquides selon la revendication 1, caractérisé en ce qu'il contient en tant que composant C le racémate des esters (IXc) suivants :

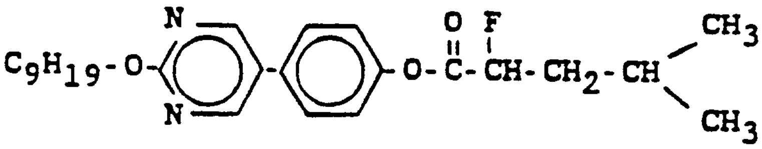

(IXc)

10. Mélange de cristaux liquides selon l'une des revendications 6 à 9, caractérisé en ce qu'il contient en tant que composant C de 2 à 20 moles-% d'un ou de plusieurs esters racémiques d'acides carboxyliques $\alpha$-substitués.

11. Mélange de cristaux liquides selon la revendication 1, caractérisé en ce qu'il contient en tant que composant C de 2 à 40 moles-% d'un ou de plusieurs composants de mélange de formule générale (V) et/ou (VI) et/ou (VII) et/ou (VIII).

12. Elément électro-optique contenant un mélange de cristaux liquides selon l'une des revendications 1 à 11.

13. Utilisation de mélanges de cristaux liquides selon l'une des revendications 1 à 11 dans des éléments électro-optiques d'affichage et de commutation.